# EUROPÄISCHE PATENTSCHRIFT

(11) **EP 3 871 030 B1**
(45) Veröffentlichungstag und Bekanntmachung des Hinweises auf die Patenterteilung: **28.02.2024**
(21) Anmeldenummer: 19801830.1
(22) Anmeldetag: 07.11.2019
(51) Int. Cl.: G02B 21/00, G02B 21/36, G02B 26/06

(54) **LICHTMIKROSKOP UND MIKROSKOPIEVERFAHREN**
LIGHT MICROSCOPE AND MICROSCOPY METHOD
MICROSCOPE OPTIQUE ET PROCÉDÉ DE MICROSCOPIE

(30) Priorität: 26.11.2018 DE 102018129657
(43) Veröffentlichungstag der Anmeldung: 01.09.2021
(73) Patentinhaber: Carl Zeiss Microscopy GmbH, 07745 Jena (DE)
(72) Erfinder: ANHUT, Tiemo, 07745 Jena (DE); SCHWEDT, Daniel, 07745 Jena (DE)
(74) Vertreter: Ridderbusch, Oliver
(86) Internationale Anmeldenummer: PCT/EP2019/080616
(87) Internationale Veröffentlichungsnummer: WO 2020/108948

(56) Entgegenhaltungen:
- DE-A1-102013 015 931
- DE-A1-102016 119 730
- US-A1- 2015 362 713

## Beschreibung

Die vorliegende Erfindung bezieht sich in einem ersten Aspekt auf ein Lichtmikroskop nach dem Oberbegriff des Anspruchs 1. In einem zweiten Gesichtspunkt betrifft die Erfindung ein Mikroskopieverfahren nach dem Oberbegriff des Anspruchs 15.

Um ein Mikroskopbild mit möglichst hoher Qualität aufzunehmen, ist die Kenntnis der Wellenfront im Strahlengang des Mikroskops vorteilhaft.

Die Wellenfront von Beleuchtungslicht, das auf eine zu untersuchende Probe geleitet wird, und die Wellenfront von nachzuweisendem Probenlicht können insbesondere durch optisch komplexe Medien verändert sein. Solche Medien können Brechzahlinhomogenitäten aufweisen und die Punktbildfunktion (Punktspreizfunktion) durch Vielfachstreuung an kleinen Teilchen zerstören. Durchlaufen das Beleuchtungslicht und das Probenlicht solche Medien, so beruhen die detektierten Messsignale nicht nur auf dem momentan untersuchten Probenbereich, sondern werden auch durch die übrigen durchlaufenen Medien beeinflusst. Die Anregung wird ineffizient, wodurch höhere Beleuchtungslichtintensitäten erforderlich werden, was wiederum zu einer Photoschädigung der Probe führen kann.

Zum Erfassen und möglichen Kompensieren dieser Beeinträchtigungen sind die direkte Wellenfrontmessung durch einen Wellenfrontsensor in der Pupillenebene sowie die indirekte Wellenfrontberechnung durch Messungen um eine Bildebene bekannt, was später näher beschrieben wird.

Ein gattungsgemäßes Lichtmikroskop beruht auf einer direkten Wellenfrontmessung des Probenlichts in der Pupillenebene, das heißt einer zur Objektivpupille konjugierten Ebene. Ein solches Lichtmikroskop ist beispielsweise beschrieben in: "Rapid Adaptive Optical Recovery of Optimal Resolution over Large Volumes" von Wang et al., veröffentlicht in Nature Methods. 2014 Jun; 11 (6):625-8. Doi: 10.1038/nmeth.2925. Ein solches gattungsgemäßes Lichtmikroskop umfasst einen Scanner zum Abrastern einer Probe mit Beleuchtungslicht und einen Lichtdetektor zum Messen von Probenlicht. Beispielsweise kann durch das Beleuchtungslicht eine Fluoreszenz der Probe angeregt werden, so dass es sich beim Probenlicht um Fluoreszenzlicht handelt. Das Lichtmikroskop umfasst weiterhin ein Mikrolinsenarray, welches mehrere Mikrolinsen umfasst und vor dem Lichtdetektor im Bereich einer Pupillenebene angeordnet ist. Der Lichtdetektor umfasst wiederum mehrere Detektorelemente und hinter jeder Mikrolinse sind mehrere der Detektorelemente angeordnet.

In entsprechender Weise umfasst ein gattungsgemäßes Mikroskopieverfahren die Schritte, dass mittels eines Scanners eine Probe mit Beleuchtungslicht abgerastert wird und Probenlicht von der Probe mittels eines Mikrolinsenarrays auf einen Lichtdetektor geleitet wird. Das Mikrolinsenarray umfasst mehrere Mikrolinsen und ist im Bereich einer Pupillenebene angeordnet. Der Lichtdetektor umfasst mehrere Detektorelemente, wobei hinter jeder Mikrolinse jeweils mehrere der Detektorelemente angeordnet sind.

Eine solche Anordnung aus Mikrolinsenarray und Lichtdetektor wird auch als Shack-Hartmann-Sensor bezeichnet und erlaubt die Messung der Wellenfront. Die Wölbung oder Krümmung der Wellenfront bestimmt, in welche Richtung eine Mikrolinse auftreffendes Licht bricht und fokussiert. Die Detektorelemente hinter der Mikrolinse ermöglichen daher eine Bestimmung der lokalen Wellenfrontkrümmung des auftreffenden Lichts. Indem mehrere Mikrolinsen verwendet werden, kann die Wellenfront über den gesamten Strahlquerschnitt vermessen werden.

Es ist bekannt, die ermittelten Wellenfrontinformationen zu nutzen, um eine adaptive Optik einzustellen. Bei der adaptiven Optik kann es sich beispielsweise um einen deformierbaren Spiegel handeln, der im Strahlengang des Beleuchtungslichts angeordnet wird. Der deformierbare Spiegel wird mit Hilfe der Wellenfrontinformationen so eingestellt, dass er Aberrationen bzw. die unerwünschte Änderung der Wellenfront aufgrund der optisch komplexen Medien zumindest teilweise kompensiert.

Ein herkömmliches Lichtmikroskop mit direkter Wellenfrontmessung, wie es beispielsweise in dem oben genannten Artikel von Wang et al. Beschrieben ist, spaltet das Probenlicht auf und leitet einen Teil auf den Shack-Hartmann-Sensor (der z.B. einen EMCCD-Kamerachip umfasst). Ein anderer Teil des Probenlichts wird hingegen mit einem separaten Detektor (z.B. einem Photomultiplier, PMT) gemessen und zur Erzeugung des Probenbilds verwendet. Diese separaten Detektoren werden genutzt, da die kurze Pixelverweilzeit eines schnell scannenden Laser-Scanning-Mikroskops kürzer ist als die Messzeit des Shack-Hartmann-Sensors nach dem Stand der Technik. Der Probenlichtanteil, der auf den Shack-Hartmann-Sensor trifft, steht für die Erzeugung des Probenbilds nicht zur Verfügung. Daher muss bei herkömmlichen Lichtmikroskopen auf einen erheblichen Anteil des Probenlichts für die eigentliche Bilderzeugung verzichtet werden. Beispielsweise ist aus US 2015/0362713 A1 ein Lichtmikroskop bekannt, bei welchem ein Detektionsstrahlengang aufgespalten wird und ein Teil des Lichts zu einem Detektor, z.B. einer Photomultiplier-Röhre, geleitet wird, während ein anderer Teil des Lichts zu einem separaten Wellenfront-Sensor / Shack-Hartmann-Sensor geleitet wird, welcher in einer Pupillenebene angeordnet ist und der Messung einer Wellenfront dient.

Ein weiterer Nachteil herkömmlicher Lichtmikroskope liegt in der geringen Kompensationsgeschwindigkeit. Eine Kompensation über die adaptive Optik ist nicht individuell pro abgetastetem Probenpunkt möglich. Vielmehr bestimmt der Shack-Hartmann-Sensor eine Wellenfront aufgrund seiner längeren Messdauer nur für einen größeren Probenbereich. Die adaptive Optik wird dementsprechend auch nur pro größerem Probenbereich verstellt, auch wenn es innerhalb dieses Probenbereichs starke Unterschiede gibt, in welcher Weise die Wellenfront beeinflusst wird.

Ein Hartmannn-Shack-Sensor zur Wellenfrontmessung in der Pupillenebene wird auch als direkter Wellenfrontsensor (englisch: direct wavefront sensor) bezeichnet. Für eine präzise Messung der Wellenfront ist diese direkte Messung in der Pupillenebene wichtig. Eine nur geringere Aussagekraft bieten indirekte Wellenfrontmessungen, die üblicherweise in mehreren Ebenen um eine Bildebene erfolgen. Je stärker die Wellenfront deformiert ist, desto größer muss die Anzahl an Ebenen gewählt werden, in denen eine Bildaufnahme mit anschließender Datenauswertung erfolgt. Eine Datenauswertung für solche indirekten Wellenfrontsensoren (englisch: indirect wavefront sensors) ist beschrieben in "Linear phase retrieval for real-time adaptive optics" von A. Polo et al, veröffentlicht in J. Europ. Opt. Soc. Rap. Public. 8, 13070 (2013). Ein entsprechendes Lichtmikroskop mit indirektem Wellenfrontsensor ist aus US 2015/0185454 A1 und DE 10 2013 015 931 A1 bekannt. Aus den aufgenommenen Daten kann eine Phase rekonstruiert werden, wobei für genaue Ergebnisse mehrere Messungen in verschiedenen Ebenen nötig sind. Zudem funktioniert eine solche Rekonstruktion der Wellenfront nur bei verhältnismäßig kleinen Aberrationen und geringem Rauschen der Messung.

Für präzise Ergebnisse sind daher die eingangs beschriebenen direkten Wellenfrontsensoren überlegen, bei denen durch die Anordnung in der Pupille eine Messung der Wellenfront ermöglicht ist und nicht etwa eine Rekonstruktion der Wellenfront aus den aufgenommenen Bilddaten erfolgt. Wie erwähnt, ist bei einem direkten Wellenfrontsensor jedoch nachteilig, dass ein erheblicher Anteil des Probenlichts für die Messung mit dem Wellenfrontsensor verwendet wird und nicht für die eigentliche Aufnahme des Probenbildes zur Verfügung steht.

Aus DE 10 2016 119 730 A1 ist ein Lichtmikroskop bekannt, bei welchem der Detektor als SPAD-Array (single-photon avalanche diode array) gestaltet sein kann.

Als eine **Aufgabe** der Erfindung kann angesehen werden, ein Lichtmikroskop und ein Mikroskopieverfahren anzugeben, welche bei möglichst einfachem Aufbau eine Probenbildaufnahme und Wellenfrontvermessung möglichst präzise und effizient erlauben.

Diese Aufgabe wird durch das Lichtmikroskop mit den Merkmalen des Anspruchs 1 und durch das Verfahren mit den Merkmalen des Anspruchs 15 gelöst.

Vorteilhafte Varianten des erfindungsgemäßen Lichtmikroskops und des erfindungsgemäßen Mikroskopieverfahrens sind Gegenstand der abhängigen Ansprüche und werden außerdem in der folgenden Beschreibung erläutert.

Bei dem Lichtmikroskop der oben genannten Art hat der Lichtdetektor eine vollständige Auslesefrequenz von mindestens 100 kHz. Zudem ist eine Elektronikeinrichtung vorgesehen und dazu eingerichtet:
- mit den jeweils hinter den Mikrolinsen angeordneten Detektorelementen Intensitätsverteilungen zu messen und hieraus eine Wellenfrontinformation bezüglich des Probenlichts abzuleiten;
- mehrere oder alle Signale der Detektorelemente zu einem Probenpunktsignal zusammenzurechnen, das heißt zu addieren oder zu integrieren, und
- mit dem Scanner nacheinander Beleuchtungslicht auf verschiedene Probenpunkte zu lenken und jeweilige Probenpunktsignale aufzunehmen, wobei für zumindest einige der verschiedenen Probenpunkte auch eine jeweilige Wellenfrontinformation bezüglich des Probenlichts bestimmt wird.

Die Elektronikeinrichtung kann nun insbesondere ein Probenbild aus den mehreren Probenpunktsignalen berechnen, wobei die ermittelten Wellenfrontinformationen für die Berechnung des Probenbilds berücksichtigt werden. Die Wellenfrontinformationen und die Probenpunktsignale wurden hierbei mit denselben Detektorelementen gewonnen.

Bei dem Verfahren der oben genannten Art werden erfindungsgemäß die Detektorelemente mit einer Frequenz ausgelesen, die innerhalb einer Pixelverweildauer liegt, mit welcher das Abrastern der Probe erfolgt. Einerseits werden mit den jeweils hinter den Mikrolinsen angeordneten Detektorelementen Intensitätsverteilungen gemessen und hieraus wird eine Wellenfrontinformation bezüglich des Probenlichts abgeleitet. Die Signale der Detektorelemente werden andererseits auch zu einem Probenpunktsignal zusammengerechnet. Mit dem Scanner wird nacheinander Beleuchtungslicht auf verschiedene Probenpunkte gelenkt und es werden jeweilige Probenpunktsignale aufgenommen. Für zumindest einige der verschiedenen Probenpunkte wird auch eine jeweilige Wellenfrontinformation bezüglich des Probenlichts bestimmt. Ein Probenbild kann nun aus den mehreren Probenpunktsignalen berechnet werden, wobei die ermittelten Wellenfrontinformationen für die Berechnung des Probenbilds berücksichtigt werden.

Zu jeder oder zumindest mehreren der Mikrolinsen wird jeweils eine Intensitätsverteilung mittels der hinter der jeweiligen Mikrolinse angeordneten Detektorelementen gemessen. Die jeweilige Intensitätsverteilung ist charakteristisch für die Wellenfrontform an der zugehörigen Mikrolinse. Daher können die Intensitätsverteilungen oder eine hieraus abgeleitete Information als Maß für die Wellenfront genutzt werden. Die Elektronikeinrichtung kann zu mehreren der Mikrolinsen oder zu jeder Mikrolinse eine Fokusposition mittels der hinter der jeweiligen Mikrolinse angeordneten Detektorelemente bestimmen. Die mehreren in dieser Weise bestimmten Fokuspositionen können als Wellenfrontinformation angesehen werden. Alternativ kann aus den Fokuspositionen eine Wellenfrontinformation abgeleitet werden. Als Wellenfrontinformation kann prinzipiell eine beliebige Information, die charakteristisch für eine Wellenfrontform ist, angesehen werden. Im vorliegenden Text können die Begriffe "Wellenfront" und "Wellenfrontinformation" austauschbar sein.

Herkömmlicherweise wurde in der Regel mit einem Shack-Hartmann-Sensor eine langsame Messung durchgeführt, während der mehrere Probenpunkte nacheinander abgetastet wurden. Herkömmlicherweise dauert das Auslesen somit länger als eine Pixelverweildauer. Dadurch waren zwei separate Detektoren erforderlich, ein Detektor für den Shack-Hartmann-Sensor und ein anderer (schnellerer) Detektor für die Aufnahme der Probenbildsignale. Erfindungsgemäß ist hierfür kein zweiter Detektor erforderlich. Indem ein Lichtdetektor mit einer vollständigen Auslesefrequenz von mindestens 100 kHz, insbesondere mindestens 200 kHz oder mindestens 1 MHz, verwendet wird, kann das Auslesen aller benötigten Detektorelemente innerhalb genau einer Pixelverweildauer liegen. Die Pixelverweildauer kann dementsprechend insbesondere einen Wert kleiner oder gleich 10 µs oder 5µs oder kleiner oder gleich 1 µs aufweisen. Die Detektorelemente geben somit für jeden abgetasteten Probenpunkt ein Signal aus. Bei besonders kurzen Pixelverweildauern kann es vorgesehen sein, dass nicht alle der Detektorelemente ausgelesen werden, so dass für die verwendeten Detektorelemente eine höhere Auslesefrequenz als die vollständige Auslesefrequenz resultiert.

Die Pixelverweilzeit oder -dauer kann bei einer gepulsten Beleuchtung die Zeitdauer von einem Lichtpuls bis zum nächsten Lichtpuls bezeichnen, wobei die Lichtpulse durch den Scanner auf verschiedene Probenpunkte gelenkt werden. Bei einer kontinuierlichen Beleuchtung kann die Beleuchtungsdauer, für die ein bestimmter Probenpunkt beleuchtet wird, als Pixelverweildauer angesehen werden. Insbesondere kann unter der Pixelverweildauer eine festlegbare Zeitspanne, nach welcher das Messsignal dem nächsten Probenpunkt / Pixel zugeordnet wird, verstanden werden. Innerhalb der Pixelverweildauer wird das von einem Detektorelement aufgenommene Messsignal integriert. Im Falle mehrerer von einem Detektorelement innerhalb der Pixelverweildauer nacheinander aufgenommener Messsignale können diese addiert werden. Werden mehrere Messignale innerhalb der Pixelverweilzeit nacheinander aufgenommen, können diese aufgrund der kontinuierlichen Scannerbewegung unterschiedlichen Sub-Pixel-Bereichen entsprechen, beispielsweise bei Oversampling. Nach Ablauf einer Pixelverweildauer wird das während der nächsten Pixelverweildauer aufgenommene Messignal dem nächsten Probenpunkt / Pixel zugeordnet.

Um ein genügend schnelles Auslesen der Detektorelemente zu ermöglichen, können diese photonenzählende Detektorelemente, insbesondere Einzelphoton-Avalanche-Dioden, sein. Photonenzählende Detektorelemente haben gegenüber den bei üblichen Shack-Hartmann-Sensoren verwendeten Detektorelementen eine wesentlich höhere Verstärkung und ermöglichen dadurch schnellere Messungen bis hin zu Raten im MHz-Bereich. Dadurch ist es möglich, Messsignale für jeden abzutastenden Probenpunkt in einem großen Bereich von Pixelverweilzeiten aufzunehmen. Damit schnelle photonenzählende Detektorelemente verwendet werden können, darf die Rate auftreffender Photonen nicht zu hoch sein. Hierfür ist die Anordnung des Mikrolinsenarrays und des darauffolgenden Lichtdetektors als direkter Wellenfrontsensor nützlich: In der Pupillenebene wird ein relativ großer Bereich verhältnismäßig gleichmäßig ausgeleuchtet, während in einer Bildebene die Lichtintensität auf eine wesentlich kleinere Fläche gebündelt wäre. Daher kann in der Pupillenebene der Photonenstrom relativ gleichmäßig auf die verschiedenen Mikrolinsen und die darauffolgenden Detektorelemente verteilt werden. So kann erreicht werden, dass jedes einzelne photonenzählende Detektorelement keine übermäßige Intensität empfängt, das heißt das Auftreffen von Photonen während einer Totzeit eines Detektorelements wird weitgehend vermieden.

Bei dem von der Anmelderin in US20150185454A1 und DE102013015931A1 beschriebenen Lichtmikroskop mit indirekter Wellenfrontmessung erfolgt eine Messung in der Bildebene, wo Wellenfrontinformationen nicht direkt gemessen werden können, sondern nur in eingeschränktem Umfang rekonstruiert werden können. Zudem verursacht der konfokal untersuchte Probenpunkt eine sehr hohe Lichtintensität auf nur wenigen Detektorelementen in der Sensorebene. Dadurch können die Detektorelemente nicht als photonenzählende Detektorelemente gestaltet beziehungsweise betrieben werden. Zudem werden bei US20150185454A1 und DE102013015931A1 optische Fasern verwendet, um Licht von den Mikrolinsen zu den Detektorelementen weiterzuleiten. Dies ist erfindungsgemäß nicht erforderlich und es kann vielmehr bevorzugt sein, dass die photonenzählenden Detektorelemente direkt hinter den Mikrolinsen angeordnet sind, ohne dazwischenliegende Komponenten. In der Pupillenebene können so erfindungsgemäß zahlreiche Detektorelemente pro Mikrolinse verwendet werden, womit die Positionsbestimmung des Lichtfokus zur jeweiligen Mikrolinse ermöglicht wird und eine präzise Wellenfrontvermessung erfolgen kann.

Die Elektronikeinrichtung eines erfindungsgemäßen Lichtmikroskops kann insbesondere dazu eingerichtet sein, aus jeder ermittelten Wellenfront(information) eine Punktspreizfunktion (PSF, englisch: point spread function) für den oder die jeweils zugehörigen Probenpunktsignale zu ermitteln. Die PSF kann insbesondere über eine Fourier-Transformation aus der Wellenfront bestimmt werden und beschreibt die Informationsübertragung bzw. Abbildung durch das Lichtmikroskop. Die Kenntnis der PSF erlaubt in prinzipiell bekannter Weise eine Verrechnung der aufgenommenen Probenpunktsignale, um ein Probenbild verbesserter Qualität zu berechnen. Insbesondere können in der Berechnung des Probenbildes die ermittelten Punktspreizfunktionen für eine Entfaltung der Probenpunktsignale genutzt werden. In dieser Weise können Aberrationen oder Auswirkungen eines optisch komplexen Mediums rechnerisch kompensiert werden.

Insbesondere kann als photonenzählendes Detektorelement ein Lichtdetektorelement verstanden werden, welches so betrieben wird, dass es die Anzahl von Photonen, die innerhalb eines bestimmten Zeitraums empfangen werden, ausgibt. Manche Lichtdetektorelemente können wahlweise außer in diesem Betriebsmodus, der auch als Geiger-Modus bezeichnet wird, auch in einem anderen Modus betrieben werden, in welchem Fall sie nicht mehr photonenzählende Detektorelemente darstellen. Beispiele von photonenzählenden Detektorelementen sind etwa Einzelphoton-Avalanche-Dioden (englisch: single-photon avalanche diode, SPAD). Ein photonenzählendes Detektorelement kann ein verstärktes Signal ausgeben, sobald es 1 Photon empfängt; die Anzahl an ausgegebenen verstärkten Signalen entspricht dann der empfangenen Photonenzahl. Ein SPAD-Detektorelement hat gegenüber den üblicherweise bei Shack-Hartmann-Sensoren verwendeten Detektorelementen eine wesentlich höhere Verstärkung. Dadurch kann ein solches Detektorelement im Geiger-Modus betrieben werden, im Unterschied zu bisher eingesetzten Shack-Hartmann-Sensoren.

Vor dem SPAD-Array kann auch ein zusätzliches Mikrolinsenarray vorhanden sein. Dieses hat die Aufgabe, den Füllfaktor zu erhöhen, also möglichst das gesamte auftreffende Licht auf das jeweilige darauffolgende Detektorelement zu leiten. Die Anzahl an Linsen des zusätzlichen Mikrolinsenarrays kann gleich der Anzahl an Detektorelementen sein. Das zusätzliche Mikrolinsenarray kann in der Fokalebene des zuvor beschriebenen Mikrolinsenarrays sein.

Ein aufgenommenes Signal eines Detektorelements wird einerseits zur Wellenfrontbestimmung verwendet und andererseits auch mit weiteren Signalen (Messsignalen) anderer Detektorelemente zu einem Probenpunktsignal zusammenaddiert. In dieser Weise können alle aufgenommenen Signale für die Erzeugung der Probenpunktsignale genutzt werden und es gehen nicht Lichtanteile für eine separate Messung der Wellenfront verloren.

Prinzipiell kann eine Wellenfrontbestimmung allein aus den gleichzeitig aufgenommenen Signalen (photon counts) verschiedener Detektorelemente erfolgen. Allerdings kann es für eine Erhöhung der Messgenauigkeit sinnvoll sein, über mehrere nacheinander aufgenommene Signale zu mitteln. Aufgrund der Scanbewegung des Beleuchtungslichts gehen nacheinander aufgenommene Signale auf verschiedene, benachbarte Probenpunkte/Probenbereiche zurück. Je nach Probenmedium kann es sein, dass für benachbarte Probenpunkte sehr ähnliche Aberrationen oder Wellenfrontdeformationen eintreten. In diesem Fall spricht man von einem isoplanatischen Patch / Fleck. Dieser bezeichnet einen Probenausschnitt mit im Wesentlichen gleicher Aberration oder Wellenfrontbeeinflussung für durchlaufendes Licht. Daher kann die Messgenauigkeit erhöht werden, wenn eine Mittelung der Signale zur Wellenfrontbestimmung gerade auf einen Probenausschnitt beschränkt ist, der dem isoplanatischen Patch entspricht. Bei einigen Ausführungsvarianten sind daher die Fokuspositionen, die zu den jeweiligen Mikrolinsen bestimmt werden, gemittelte Fokuspositionen. Eine gemittelte Fokusposition wird von der Elektronikeinrichtung berechnet, indem diese Signale mittelt, welche von den hinter der jeweiligen Mikrolinse angeordneten Detektorelementen zu verschiedenen nacheinander beleuchteten Probenpunkten aufgenommen wurden. Hier können also die von demselben Detektorelement nacheinander aufgenommenen Signale gemittelt werden. Diese Mittelung erfolgt nur für die Wellenfrontbestimmung, nicht aber für die Berechnung der Probenbildpunkte. Unter einer Mittelung kann hier auch eine Addition oder andere Aggregation der Signale aufgefasst werden.

Die Größe eines Probenbereichs, für den eine gemittelte Fokusposition berechnet wird, sollte idealerweise an einen isoplanatischen Probenfleck angepasst sein. Insbesondere zu diesem Zweck kann die Elektronikeinrichtung dazu eingerichtet sein,
- mit den jeweiligen Detektorelementen zu einer Mikrolinse zunächst für jeden nacheinander beleuchteten Probenpunkt jeweils momentane Fokuspositionen zu bestimmen,
- diese mehreren momentanen Fokuspositionen (die zu derselben Mikrolinse aufgenommen wurden) zu mitteln, wobei in dieser Weise eine der gemittelten Fokuspositionen berechnet wird,
- diese Anzahl an momentanen Fokuspositionen, die gemittelt werden, abhängig von einer Differenz zwischen den nacheinander erfassten, momentanen Fokuspositionen festzulegen.

In einer Abwandlung hiervon kann auch anstelle einer Mittelung mehrerer Fokuspositionen jeweils eine Mittelung (oder Summierung) der nacheinander von demselben Detektorelement aufgenommenen Signale durchgeführt werden; hiermit erfolgt anschließend die Fokusbestimmung, was ebenfalls einer Mittelung über mehrere nacheinander untersuchte Probenpunkte entspricht.

Innerhalb eines isoplanatischen Patches ist die Differenz zwischen den momentanen Fokuspositionen, die mittels derselben Mikrolinse nacheinander bestimmt werden, klein. Daher kann die Differenz zwischen den momentanen Fokuspositionen zu derselben Mikrolinse als Kriterium genutzt werden, ob die Messdaten zu einem isoplanatischen Patch gehören. Beispielsweise kann eine Mittelung für alle momentanen Fokuspositionen vorgenommen werden, so lange die genannte Differenz einen vorgegebenen Schwellwert nicht überschreitet. Als Kriterium kann prinzipiell anstelle einer Differenz zwischen den momentanen Fokuspositionen auch eine Differenz zwischen aufeinanderfolgenden Messsignalen desselben Detektorelements verwendet werden.

Eine ungewünschte Beeinflussung des Probenlichts kann durch die beschriebenen Ausführungsvarianten effektiv rechnerisch kompensiert werden. Alternativ oder zusätzlich kann auch eine Korrektur des Beleuchtungslichts erfolgen. Hierzu kann ein adaptives Optikelement in einem Beleuchtungsstrahlengang vorhanden sein, entweder in einem Teil des Beleuchtungsstrahlengangs, in dem allein Beleuchtungslicht geleitet wird, oder in einem gemeinsamen Strahlengang von Beleuchtungslicht und Probenlicht. Mit dem adaptiven Optikelement ist eine Wellenfront des Beleuchtungslichts variabel beeinflussbar und je nach Anordnung auch eine Wellenfront des Probenlichts. Hierzu kann das adaptive Optikelement über einen Strahlquerschnitt variable Werte einer Phasenverzögerung einstellen. Beispielsweise kann dies pixelweise mit einem Mikrospiegelarray erfolgen oder auch mit einem deformierbaren Spiegel oder einem anderen räumlichen Lichtmodulator (englisch: spatial light modulator). Die Elektronikeinrichtung ist nun dazu eingerichtet, die ermittelten Wellenfronten für eine Einstellung des adaptiven Optikelements zu berücksichtigen, um die Wellenfront des Beleuchtungslichts zu korrigieren. Durch diese Korrektur kann das Beleuchtungslicht insbesondere als beugungsbegrenzter Lichtfleck in die Probenebene abgebildet werden. Die Wellenfrontinformationen können insbesondere sowohl für die Einstellung des adaptiven Optikelements als auch für die Berechnung des Probenbilds genutzt werden.

Zusätzlich oder alternativ kann zum Manipulieren des Probenlichts ein adaptives Optikelement vorhanden sein, welches nachfolgend auch als adaptive Detektionsoptik bezeichnet wird. Diese ist in einem Detektionsstrahlengang angeordnet, das heißt in einem Teil des Mikroskopstrahlengangs, in dem ausschließlich Probenlicht oder alternativ Beleuchtungs- und Probenlicht geleitet werden. Mit der adaptiven Detektionsoptik wird eine Wellenfront des Probenlichts (und je nach Anordnung auch eine Wellenfront des Beleuchtungslichts) über den Querschnitt variabel beeinflusst. Die Elektronikeinrichtung ist wiederum dazu eingerichtet, die ermittelten Wellenfrontinformationen nicht nur für die Berechnung des Probenbilds zu berücksichtigen, sondern auch für eine Einstellung der adaptiven Detektionsoptik.

Für eine sprachlich einfachere Ausdrucksweise wird nachfolgend auf die "adaptive Optik" oder das "adaptive Optikelement" eingegangen, was sowohl das adaptive Optikelement für Beleuchtungslicht als auch die adaptive Detektionsoptik umfassen soll, sofern nicht explizit anders angegeben.

Bei herkömmlichen Lichtmikroskopen mit adaptiver Optik erfolgt eine Umstellung der adaptiven Optik nach einer starr festgelegten oder unveränderlichen Dauer beziehungsweise Anzahl abgetasteter Probenpunkte. Aufgrund der bisher geringen Zeitauflösung von Shack-Hartmann-Sensoren war insbesondere eine Anpassung der adaptiven Optik mit jeder ermittelten Wellenfront sinnvoll. Die bei der Erfindung wesentlich höhere Zeitauflösung der Wellenfrontbestimmung ermöglicht es hingegen, während dem Scanvorgang variabel festzulegen, wann eine Anpassung des adaptiven Optikelements angebracht ist. So kann die Elektronikeinrichtung dazu eingerichtet sein, eine Anzahl an abgerasterten Probenpunkten, nach welcher eine Verstellung des adaptiven Optikelements erfolgt, über einen Probenscan zu variieren, insbesondere abhängig davon, wie stark sich die ermittelte Wellenfront beziehungsweise ermittelte Wellenfrontinformationen zwischen aufeinanderfolgenden Probenpunkten ändert.

Eine Rückkopplungsschleife mit Anpassung des adaptiven Optikelements bedeutet einen zusätzlichen Zeitbedarf. Unter anderem aus diesem Grund kann es sinnvoll sein, das adaptive Optikelement nicht nach jedem abgerasterten Probenpunkt umzustellen. Zudem sollte eine Datenberechnung für die Einstellung des adaptiven Optikelements in möglichst zeiteffizienter Weise erfolgen. Während die Berechnung des Probenbildes keine Echtzeit-Berechnung der Wellenfront erfordert, ist für das adaptive Optikelement ein schnell arbeitender Vorgang besonders wichtig. Daher kann es günstig sein, wenn für die Einstellung des adaptiven Optikelements eine erste schnellere Wellenfrontbestimmung erfolgt und zusätzlich eine eventuell präzisere Wellenfrontbestimmung (aus denselben aufgenommenen Signalen) nachträglich für die Probenbildberechnung. In einen Datenpuffer (also ein Zwischenspeicher, in dem vorübergehend Daten geladen werden) können aufgenommene Signale zu zwei oder mehr aufeinanderfolgend beleuchteten Probenpunkten geladen werden. Die Elektronikeinrichtung führt eine Datenmittelung von Signalen, die im Datenpuffer zwischengespeichert sind, durch (beispielsweise können die nacheinander aufgenommenen Signale von jedem Detektorelement addiert bzw. gemittelt werden). Auf Basis der gemittelten Signale erfolgt eine Fokusbestimmung und Ermittlung der Wellenfront. Damit wird eine einzige Wellenfront für zwei oder mehr nacheinander abgetastete Probenpunkte ermittelt. Das adaptive Optikelement wird nun auf Basis der in dieser Weise ermittelten Wellenfront während des Abrasterns der Probe eingestellt. Dies erlaubt einen sehr schnellen Mechanismus zum Einstellen des adaptiven Optikelements. Indem noch alle Signale gespeichert sind, kann für die Verrechnung der Probenpunktsignale hingegen eine andere Mittelung der Signale zur Fokusbestimmung durchgeführt werden (beispielsweise indem die Anzahl zu mittelnder Signale von der Differenz aufeinanderfolgender Signale abhängt, wie oben beschrieben). Mit dem Datenpuffer kann auch eine gleitende Durchschnittsberechnung umgesetzt werden.

Die Elektronikeinrichtung kann dazu eingerichtet sein, die Signale der Detektorelemente, die zu verschiedenen Probenpunkten aufgenommen wurden, in einem Datenspeicher zu speichern. Die Signale werden also nicht nur für eine momentane Bildgebung in der Berechnung des Probenbildes verwendet. Vielmehr können die gespeicherten Signale auch für spätere Bildgebungen verwendet werden. Einerseits können ermittelte Wellenfrontinformationen für zeitlich später aufgenommene Probenpunktsignale verwendet werden, sofern diese zu denselben Probenpunkten aufgenommen wurden, zu denen die Wellenfrontinformationen zuvor ermittelt wurden. Andererseits erlaubt ein Speichern auch, dass die Wellenfrontinformationen anschließend in verschiedener Weise ausgewertet werden. So kann die Elektronikeinrichtung unterschiedliche Auswahlmöglichkeiten einem Nutzer bereitstellen, wie aus den Signalen die Wellenfrontinformationen ermittelt und ein Probenbild berechnet wird. Beispielsweise können sich die Auswahlmöglichkeiten darin unterscheiden, wie nacheinander aufgenommene Wellenfrontinformationen / Fokuspositionen gemittelt werden, insbesondere hinsichtlich der Anzahl zu mittelnder Daten. Dadurch können unterschiedlich große isoplanatische Bereiche für die Berechnung eines einzigen Probenbildes festgelegt werden.

Das Lichtmikroskop der Erfindung kann auch für eine Mehrpunktabtastung gestaltet sein. In diesem Fall sind die Elektronikeinrichtung und Optikelemente zum Leiten von Beleuchtungslicht zu einer Probe dazu eingerichtet, mit zwei Beleuchtungslichtstrahlen gleichzeitig die Probe abzurastern. Im Bereich einer Zwischenbildebene (im Detektionsstrahlengang) kann ein Strahlteiler vorhanden sein, insbesondere ein Linsenarray. Hiermit wird Probenlicht auf verschiedene Strahlengänge gespalten, die zu unterschiedlichen Teilen des Mikrolinsenarrays mit den dahinter befindlichen Detektorelementen führen. Die genannten Teile des Mikrolinsenarrays können als separate Bauteile oder als eine gemeinsame Mikrolinsenplatte gestaltet sein. Ebenso können die Detektorelemente hinter diesen zwei (oder mehr) Teilen des Mikrolinsenarrays zwei (oder mehr) separate Detektoreinrichtungen bilden oder Abschnitte desselben Arrays an Detektorelementen sein.

In der Elektronikeinrichtung kann ein Auswertungsalgorithmus gespeichert sein, welcher dazu gestaltet ist, aus den mehreren bestimmten Fokuspositionen (also den über verschiedene Mikrolinsen bestimmten Fokuspositionen) die Wellenfront des Probenlichts zu ermitteln. Der Auswertungsalgorithmus kann durch Testdaten trainiert sein und insbesondere ein neuronales Netzwerk benutzen, um aus einem Muster an Fokuspositionen auf eine Wellenfront zu schließen.

Das Probenpunktsignal, das aus den (gleichzeitig) aufgenommenen Signalen der Detektorelemente berechnet wird, kann auch ein Konfokalsignal sein. Durch ein Pinhole (Lochblende) im Beleuchtungsstrahlengang wird ein beugungsbegrenzt punktförmiger Fokus erzeugt. Ein weiteres Pinhole im Detektionsstrahlengang (Detektionspinhole) ist in einer Zwischenbildebene angeordnet, um so eine konfokale Abbildung zu erzeugen. Damit aber noch eine Messung der Wellenfront möglich ist, darf das Detektionspinhole nicht zu klein sein. Ansonsten würde bloß eine im Wesentlichen kugelförmige Wellenfront vom Detektionspinhole ausgehen. Während in der Konfokalmikroskopie häufig ein Durchmesser des Detektionspinholes von kleiner 1 Airy verwendet wird, wird bei der beschriebenen Erfindungsvariante ein Durchmesser des Detektionspinholes verwendet, der wesentlich größer ist, beispielsweise mindestens 2 oder mindestens 3 Airy. Damit ein Probenpunktsignal möglichst nur auf dem Probenlicht aus einem kleinen Probenbereich beruht, kann es vorgesehen sein, dass nicht die gleichzeitig aufgenommenen Signale aller Detektorelemente, sondern nur von manchen Detektorelementen, addiert werden. Auch ist es möglich, einen Konfokalanteil aus den aufgenommenen Signalen zu einem Probenpunkt auf Basis einer Modenzerlegung des elektrischen Felds zu extrahieren.

Eine aktive Kühlvorrichtung kann vorgesehen sein, um die Detektorelemente zu kühlen und so ein Dunkelrauschen zu reduzieren.

In der vorliegenden Beschreibung kann unter einem "Mikrolinsenarray" eine Anordnung mehrerer Mikrolinsen nebeneinander, in einem zweidimensionalen Muster, verstanden werden. Die Bezeichnung "Mikrolinse" soll keine Beschränkung der Abmessungen einer Linse implizieren, sondern kann so verstanden werden, dass ein Strahlquerschnitt von auftreffendem Licht größer als ein Linsendurchmesser ist, beispielsweise mindestens 2 oder 5 mal so groß.

Die Anordnung des Mikrolinsenarrays im Bereich einer Pupillenebene kann so verstanden werden, dass das Mikrolinsenarray in einer Pupillenebene oder in der Nähe einer Pupillenebene angeordnet ist. Dies kann insbesondere so verstanden werden, dass sich das Mikrolinsenarray entlang der Lichtpropagationsrichtung räumlich näher an einer Pupillenebene als an der nächsten (Zwischen-)Bildebene befindet.

Die Elektronikeinrichtung kann mit prinzipiell beliebigen elektronischen Komponenten oder Recheneinrichtungen gebildet sein. Beschriebene Funktionen der Elektronikeinrichtung können in Software oder Hardware programmiert sein. Teile der Elektronikeinrichtung können auch an einem vom Rest des Lichtmikroskops entfernten Ort angeordnet sein und beispielsweise über Datenkabel oder eine Internetverbindung kommunikativ verbunden sein.

Unter dem Scanner kann allgemein eine Vorrichtung verstanden werden, mit welcher eine Lichtablenkung variabel verstellbar ist. Hierzu können beispielsweise ein oder mehrere bewegbare, insbesondere neigbare, Optikelemente vorhanden sein. Die Optikelemente können zum Beispiel Spiegel, Linsen oder Prismen sein. Der Scanner lenkt das Beleuchtungslicht nacheinander auf verschiedene Probenpunkte.

Das Beleuchtungslicht kann prinzipiell Licht beliebiger Spektralbereiche umfassen. Es kann gepulst oder kontinuierlich auf die Probe geleitet werden. Als Lichtquelle können ein oder mehrere Laser oder andere Leuchtmittel eingesetzt werden. Es können auch mehrere fest in der Phase gelockte Pulslaser für kohärente Verfahren wie CARS oder SRS als Beleuchtungslicht oder zusätzlich zu dem hier beschriebenen Beleuchtungslicht verwendet werden, wobei das für die kohärenten Verfahren ausgesandte Licht ebenfalls über das adaptive Optikelement geleitet wird. Das Beleuchtungslicht kann insbesondere zur Fluoreszenzanregung, zur Mehrphotonenanregung oder zur konfokalen Beleuchtung genutzt werden. Das Probenlicht wird aufgrund der Einstrahlung des Beleuchtungslichts ausgesendet und kann unterschiedlicher Art sein. Beispielsweise kann es sich um Fluoreszenz- oder Phosphoreszenzlicht handeln. Das Probenlicht kann aber auch an der Probe gestreutes Beleuchtungslicht sein oder auch durch andere optische Effekte erzeugt sein. Bei einer Mehrphotonenanregung kann eine Probenanregung auch als "guide star" bezeichnet werden, wobei das vom "guide star" ausgehende Probenlicht wie beschrieben gemessen und ausgewertet wird. Die Probe kann auch mit fluoreszierenden Kügelchen (beads) versehen sein, so dass gezielt Emitter bereitgestellt werden, die eine Wellenfrontbestimmung vereinfachen. Hierbei kann die Kenntnis genutzt werden, dass die "beads" Punktemitter darstellen (und somit eine Kompensation der gemessenen Aberrationen eine Punktlichtquelle ergeben sollte), wohingegen andere emittierende Probenbereiche nicht zwingend Punktemitter darstellen.

Als Wellenfront kann eine Fläche des Lichts, insbesondere des Probenlichts, verstanden werden, auf welcher das Licht die gleiche Phase hat.

Zum einfacheren sprachlichen Verständnis werden zahlreiche Ausführungsbeispiele mit einer Bestimmung von Fokuspositionen beschrieben, um hieraus eine Wellenfront zu ermitteln. In Abwandlungen dieser Ausführungsbeispiele kann anstelle einer Fokuspositionsbestimmung auch eine andere Wellenfrontinformation aus den aufgenommenen Intensitätsverteilungen ermittelt werden. Unter einer "Ermittlung einer Wellenfront" kann somit das Ermitteln einer Information über die Wellenfront beziehungsweise eines Maßes für die Wellenfront angesehen werden.

Die als zusätzliche Merkmale des Lichtmikroskops beschriebenen Eigenschaften der Erfindung ergeben bei bestimmungsgemäßer Verwendung auch Varianten des erfindungsgemäßen Verfahrens. In umgekehrter Weise kann das Lichtmikroskop auch zum Ausführen der beschriebenen Verfahrensvarianten eingerichtet sein. Insbesondere kann die Elektronikeinrichtung dazu eingerichtet sein, die beschriebenen Verfahrensschritte auszuführen und hierzu die Lichtquelle, den Scanner, den Lichtdetektor und andere Mikroskopkomponenten entsprechend anzusteuern.

Weitere Vorteile und Merkmale der Erfindung werden nachstehend mit Bezug auf die beigefügten schematischen Figuren beschrieben:
- Fig. 1: ist eine schematische Darstellung eines Ausführungsbeispiels eines Lichtmikroskops der Erfindung;
- Fig. 2: zeigt vergrößert einen Ausschnitt aus Fig. 1;
- Fig. 3: ist eine schematische Darstellung eines weiteren Ausführungsbeispiels eines Lichtmikroskops der Erfindung;
- Fig. 4: zeigt schematisch den Ablauf eines Verfahrens der Erfindung und
- Fig. 5: zeigt schematisch den Ablauf einer weiteren Verfahrensvariante der Erfindung.

Gleiche und gleich wirkende Bestandteile sind in den Figuren in der Regel mit denselben Bezugszeichen gekennzeichnet.

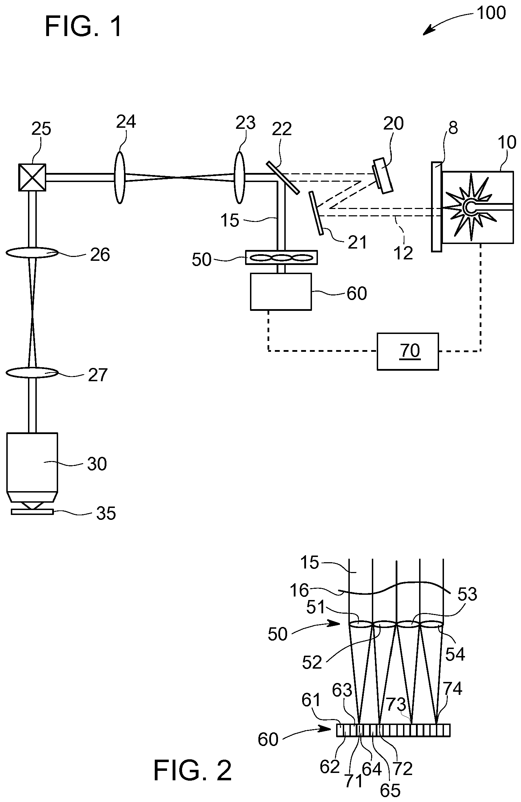

Fig. 1 zeigt ein Ausführungsbeispiel eines erfindungsgemäßen Lichtmikroskops 100, welches als Laser-Scanning-Mikroskop gestaltet ist.

Dieses umfasst einen Lichtquellenanschluss 8, über den Beleuchtungslicht 12 einer Lichtquelle 10 einkoppelbar ist. Die Lichtquelle 10 umfasst hier beispielhaft einen oder mehrere Laser. Über optionale Optikelemente (beispielsweise eine hier nicht dargestellte Spiegeltreppe) kann Beleuchtungslicht von einem oder mehreren der Laser auf denselben Strahlengang zusammengeführt werden.

Mit dem Beleuchtungslicht 12 wird eine Probe 35 abgerastert. Hierunter ist zu verstehen, dass das Beleuchtungslicht 12 auf einen Probenpunkt fokussiert wird und gemäß einer Scanbewegung nacheinander verschiedene Probenpunkte beleuchtet. Zum Leiten des Beleuchtungslichts 12 zur Probe 35 sind mehrere Optikelemente 21, 23, 24, 26, 27 sowie ein Objektiv 30 vorhanden. Um mit dem Beleuchtungslicht 12 die Probe 35 zu scannen, wird ein Scanner 25 verwendet. Dieser kann beispielsweise zwei bewegbare Scanspiegel oder eine andere Anzahl an Scanspiegeln umfassen. Prinzipiell sind auch beliebige andere verstellbare Strahlablenkeinrichtungen als Scanner möglich, beispielsweise ein akusto-optisch arbeitender Strahlablenker.

Von der Probe 35 wird Probenlicht 15 ausgesendet, bei dem es sich beispielsweise um Fluoreszenzlicht oder Phosphoreszenzlicht handeln kann. Das Beleuchtungslicht kann insbesondere gepulst abgestrahlt werden und für eine Multiphoton-Fluoreszenzanregung genutzt werden. Dadurch wird Probenlicht 15 nur aus einem besonders kleinen Probenbereich emittiert und weist eine kürzere Wellenlänge auf als das Beleuchtungslicht 12.

In dem dargestellten descanned-Aufbau wird das Probenlicht 15 über das Objektiv 30, den Scanner 25 und die Optikelemente 27, 26, 24, 23 zurückgeleitet. Mittels eines Strahlteilers 22 wird es vom Beleuchtungslicht 12 räumlich getrennt. Der Strahlteiler 22 kann beispielsweise dazu gestaltet sein, wellenlängenabhängig Licht entweder zu reflektieren oder zu transmittieren. Das Probenlicht 15 wird nun über ein Mikrolinsenarray 50 auf einen Lichtdetektor 60 geleitet.

Das Mikrolinsenarray 50 und der darauffolgende Lichtdetektor 60 sind in Fig. 2 vergrößert dargestellt. Das Mikrolinsenarray 50 umfasst mehrere in einem zweidimensionalen Muster nebeneinander angeordnete Mikrolinsen 51-54. Der Lichtdetektor 60 umfasst pro Mikrolinse 51-54 mehrere Detektorelemente. In Fig. 2 befinden sich hinter der ersten Mikrolinse 51 mehrere Detektorelemente 61-65, wobei die Detektorelemente hinter den übrigen Mikrolinsen 52-54 zur besseren Übersichtlichkeit nicht mit Bezugszeichen versehen sind. Ein Durchmesser einer Mikrolinse 51 ist demnach größer als ein Abstand benachbarter Detektorelemente 61, 62, beispielsweise mindestens 5mal so groß.

Das Mikrolinsenarray ist hier in einer Pupillenebene oder im Bereich einer Pupillenebene angeordnet. Der Vorteil hiervon wird später näher erläutert. Der Abstand der Detektorelemente 61-65 von den Mikrolinsen 51-54 ist gleich oder im Wesentlichen gleich der Brennweite der Mikrolinsen 51-54. Hierdurch hängen Fokuspositionen 71-74 von Probenlicht 15 auf den Detektorelementen von der Form der Wellenfront 16 ab, wenn diese auf die Mikrolinsen 51-54 trifft. Über jede Mikrolinse 51-54 kann ein Abschnitt der Wellenfront 16 des gesamten Probenlichtquerschnitts untersucht werden, indem hinter jeder Mikrolinse 51-54 eine Fokuspositionsbestimmung (das heißt eine Schwerpunktbestimmung der empfangenen Lichtintensität / Photonenzahl) mit den jeweiligen Detektorelementen 61-65 erfolgt. Aus diesen mehreren Fokuspositionen 71-74 kann die Wellenfront 16 berechnet werden. Allgemeiner formuliert kann aus der jeweiligen Intensitätsverteilung hinter den Mikrolinsen eine Wellenfrontinformation bestimmt werden, welche die Wellenfront 16 beschreibt oder kennzeichnet.

Die Wellenfront 16 wird durch Medien, die vom Probenlicht 15 durchlaufen werden, beeinflusst. Gerade optisch komplexe Proben oder Probenmedien haben daher eine relevante Auswirkung auf die Wellenfront 16. Bei biologischen Proben können unterschiedliche Zellbestandteile stark unterschiedliche Auswirkungen haben, insbesondere wenn tiefere Zellschichten untersucht werden. Auch nichtbiologische Proben, beispielsweise elektronische Bauteile, können komplexe Strukturen haben, welche die Wellenfront stark beeinflussen.

Eine Qualitätsverbesserung eines aufgenommenen Mikroskopbildes kann durch eine nachträgliche Berechnung erreicht werden, welche die Kenntnis der Wellenfront 16 nutzt. Herkömmliche Mikroskope nutzen separate Lichtdetektoren zur direkten Wellenfrontmessung und für die Aufnahme eines Mikroskopbildes. Dies ist darin begründet, dass die Probenbildaufnahme mit einer sehr schnellen Abtastung der Probe erfolgt, womit sehr schnelle Detektoren erforderlich werden. Die zur Wellenfrontmessung eingesetzten Sensoren sind hingegen in der Regel wesentlich langsamer. Dadurch können die von einem Wellenfrontsensor gemessenen Signale nicht einem einzigen Probenpunkt zugeordnet werden und werden nicht für die Probenbildmessung verwendet. Somit geht bei herkömmlichen Mikroskopen ein großer Anteil der Probenlichtintensität durch die Wellenfrontmessung verloren und steht nicht der Probenbildaufnahme zur Verfügung.

Diese Nachteile werden bei der Erfindung überwunden. Das Lichtmikroskop 100 nutzt denselben Lichtdetektor 60 und dieselben hiermit aufgenommenen Messdaten / Signale, um sowohl die Wellenfront zu bestimmen, als auch um die Probenpunktsignale zu bestimmen, die unter Berücksichtigung der ermittelten Wellenfront zu einem Probenbild verrechnet werden. Es wird nicht Probenlicht für eine Wellenfrontmessung abgezweigt, welches dadurch nicht der Probenbilderfassung zur Verfügung stünde.

Hierfür sind insbesondere die nachfolgend beschriebenen Aspekte relevant.

Der Lichtdetektor 60 hat eine vollständige Ausleserate von mindestens 100 kHz, was die Frequenz bezeichnet, mit welcher alle Detektorelemente des Detektors 60 ausgelesen werden. Dadurch kann die Ausleserate mindestens so hoch wie die Abtastrate sein, das heißt, die inverse Auslesefrequenz kann kleiner oder gleich der inversen Pixelverweilzeit sein. Prinzipiell genügt es, wenn ein Teil und nicht alle der Detektorelemente des Lichtdetektors 60 für einen abgetasteten Probenpunkt ausgelesen werden. Die Beschreibungen zu Detektorelementen 61-65 des Detektors 60 können daher auch so aufgefasst werden, dass ein Teil und nicht alle der Detektorelemente bezeichnet werden. Daher ist es ausreichend, wenn die Dauer zum Auslesen der für die Bildberechnung verwendeten Detektorelemente 61 -65 gleich oder kleiner als eine Pixelverweildauer ist, während eine Dauer zum Auslesen aller Detektorelemente auch höher als die Pixelverweildauer sein könnte.

Als Detektorelemente 61-65 können photonenzählende Detektorelemente bevorzugt sein, insbesondere Einzelphoton-Avalanche-Dioden (englisch: single-photon avalanche diode, SPAD). Photonenzählende Detektorelemente haben eine sehr hohe Zeitauflösung, die wesentlich besser ist als die von beispielsweise EMCCD-Sensoren, welche häufig zur Wellenfrontmessung verwendet werden. Die photonenzählenden Detektorelemente werden so betrieben, dass ihre Auslesezeit (das heißt die Dauer einer Photonenzählung) der Pixelverweilzeit entspricht, mit welcher ein Probenpunkt (Pixel) über den Scanner beleuchtet wird. Eine Photonenzählung erfolgt für jeden Probenpunkt.

Damit ein photonenzählendes Detektorelement ein präzises Ergebnis liefert, sollte es möglichst selten in Sättigung geraten. Nach Empfang eines Photons und Auslösung der Ladungslawine vergeht eine Zeitdauer (Totzeit), bis das nächste Photon nachgewiesen werden kann. Damit möglichst selten eine Sättigung des Lichtdetektors eintritt, ist es vorteilhaft, wenn der Lichtdetektor eine große Anzahl an Detektorelementen, beispielsweise über 10.000, umfasst, die hinter einem Mikrolinsenarray in der Pupillenebene angeordnet sind. Das von einem Probenpunkt emittierte Probenlicht leuchtet die Pupille in etwa gleichmäßig aus, also wesentlich gleichmäßiger als eine Bildebene. In der Pupillenebene werden die Probenlichtanteile daher wesentlich gleichmäßiger auf die mehreren Mikrolinsen mit ihren folgenden Detektorelementen verteilt.

Neben der Anordnung des Mikrolinsenarrays in der Pupillenebene ist auch eine Einstellung der Beleuchtungsintensität oder einer Beleuchtungspulsfrequenz relevant, um eine Sättigung des Lichtdetektors möglichst zu vermeiden. Die Elektronikeinrichtung kann dazu eingerichtet sein, während einem Scanvorgang die bisher aufgenommenen Messignale der Detektorelemente danach auszuwerten, ob eine Sättigung wahrscheinlich ist. Dies kann beispielsweise angenommen werden, wenn eine Photonenzählung von einem oder mehreren Detektorelementen einen vorab festgelegten Schwellwert überschreitet. Daraufhin kann die Elektronikeinrichtung eine Beleuchtungsintensität und/oder Pulsfrequenz der Lichtquelle verkleinern.

Eine Elektronikeinrichtung 70 steuert den Lichtdetektor 60, insbesondere die zur Bildaufnahme beschriebenen Prozesse, wie die Berechnung von Wellenfrontinformationen, das Aggregieren von Messsignalen des Lichtdetektors zum Bilden eines Probenpunktsignals / Konfokalsignals, sowie das Berechnen eines Probenbilds aus den mehreren nacheinander aufgenommenen Probenpunktsignalen unter Berücksichtigung der Wellenfrontinformationen. Die Elektronikeinrichtung 70 kann weitere Mikroskopkomponenten steuern, insbesondere die Lichtquelle 10, das adaptive Optikelement 20 und/oder den Scanner 25.

Bei dem in Fig. 1 gezeigten Ausführungsbeispiel befindet sich das adaptive Optikelement 20 im Beleuchtungsstrahlengang. In einer Abwandlung hiervon kann das adaptive Optikelement 20 auch in einem gemeinsamen Strahlengang des Beleuchtungslichts 12 und Probenlichts 15 angeordnet werden, insbesondere zwischen dem Strahlteiler 22 und dem Objektiv 30. Probenlicht 15 kann hierbei ebenfalls über das adaptive Optikelement 20 geleitet und von diesem in seiner Wellenfront manipuliert werden.

Bei einer Abwandlung des Ausführungsbeispiels von Fig. 1 ist eine Pinhole-Blende ergänzt, beispielsweise in einer zur Probenebene, in welcher die Probe 35 angeordnet ist, konjugierten Ebene. Diese Ebene kann zwischen dem Objektiv 30 und dem Strahlteiler 22 liegen, insbesondere in der dargestellten Zwischenbildebene zwischen den Optikelementen 26 und 27 oder in der Zwischenbildebene zwischen den Optikelementen 23 und 24. In diesem Fall kann das adaptive Optikelement 20 oder ein weiteres adaptives Optikelement zwischen der Probe 35 und der Pinhole-Blende angeordnet sein.

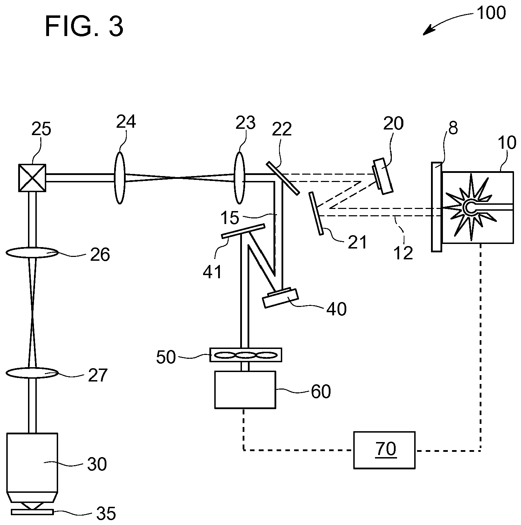

Ein abgewandeltes Ausführungsbeispiel ist in Fig. 3 gezeigt. Dieses unterscheidet sich von Fig. 1 darin, dass eine adaptive Detektionsoptik 40 im Detektionsstrahlengang ergänzt ist. Die adaptive Detektionsoptik 40 kann so gebildet sein, wie zum adaptiven Optikelement 20 beschrieben. Im dargestellten Beispiel von Fig. 3 trifft Probenlicht 15 zunächst auf die adaptive Detektionsoptik 40 und anschließend auf das Mikrolinsenarray 50, wobei diese Reihenfolge aber auch vertauscht sein kann. Ein Optikelement 41, hier ein Spiegel, ist beispielhaft zum Weiterleiten des Probenlichts 15 in Fig. 3 dargestellt. Die adaptive Detektionsoptik 40 kann zusätzlich zum adaptiven Optikelement 20 vorgesehen sein, wie dargestellt, wobei alternativ auch das adaptive Optikelement 20 entfallen kann. Die adaptive Detektionsoptik 40 kann im Wesentlichen von der Elektronikeinrichtung 70 so gesteuert werden wie zum adaptiven Optikelement 20 beschrieben. Insbesondere kann die adaptive Detektionsoptik 40 während einem Probenscan abhängig von momentan gemessenen Wellenfrontinformationen angepasst werden.

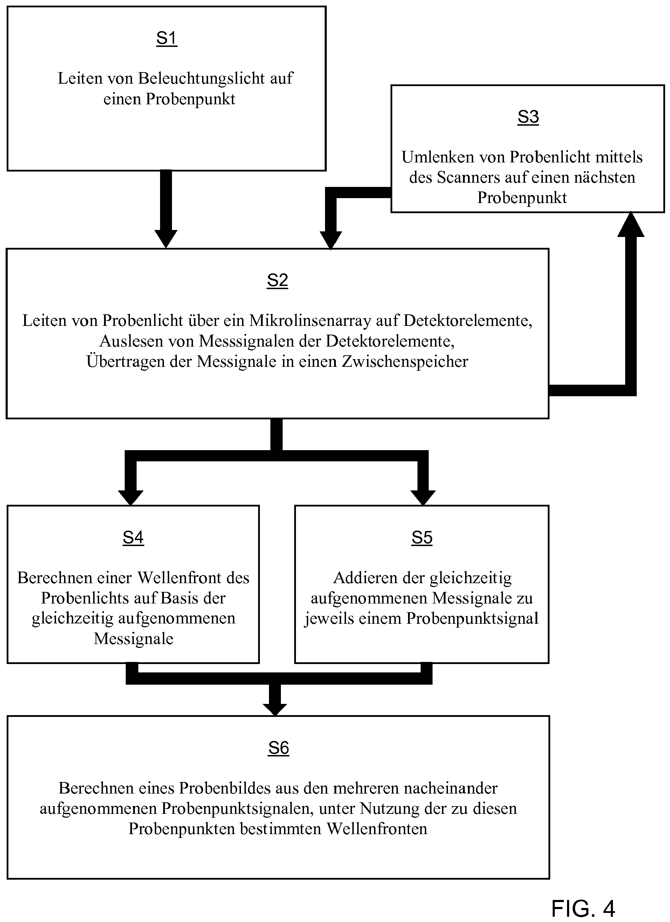

Die einzelnen Verfahrensschritte zur Bildaufnahme und Wellenfrontmessung sind in Fig. 4 veranschaulicht. Die Elektronikeinrichtung eines Ausführungsbeispiels des erfindungsgemäßen Lichtmikroskops ist dazu eingerichtet, diese Verfahrensschritte automatisiert durchzuführen, insbesondere durch entsprechende Ansteuerung der Lichtquelle, des Scanners und des Lichtdetektors.

In Verfahrensschritt S1 wird Beleuchtungslicht auf einen Probenpunkt fokussiert. Das Beleuchtungslicht kann beispielsweise ein Lichtpuls zur Mehrphotonenanregung sein.

Gemäß Schritt S2 wird von dem Probenpunkt ausgehendes Probenlicht über das Mikrolinsenarray auf die Detektorelemente geleitet. Nach der Pixelverweilzeit, die durch die Geschwindigkeit des Scanners und der beabsichtigten Auflösung vorgegeben ist, werden die Messignale der Detektorelemente ausgelesen. Bei photonenzählenden Detektorelementen stellt jedes Messsignal eine gemessene Photonenanzahl dar. Diese Messsignale werden in einem Datenspeicher zwischengespeichert.

In Schritt S3 wird das Probenlicht mittels des Scanners auf einen nächsten Probenpunkt umgelenkt. Die Scanbewegung kann kontinuierlich erfolgen, womit die Schritte S2 und S3 gleichzeitig erfolgen. Hierbei kann eine Unterteilung der Probe in Probenbereiche angenommen werden, wobei es als derselbe Probenpunkt gilt, wenn der Scanner das Beleuchtungslicht innerhalb desselben Probenbereichs bewegt; trifft das Beleuchtungslicht auf einen darauffolgenden benachbarten Probenbereich, wird dies als Umlenken auf den nächsten Probenpunkt bezeichnet.

Für den nächsten Probenpunkt wird ebenfalls gemäß Schritt S2 Probenlicht gemessen und die entsprechenden Messsignale werden im Datenspeicher / Zwischenspeicher gespeichert.

In dieser Weise wird die gesamte Probe, beziehungsweise der gesamte interessierende Probenausschnitt (ROI, region of interest) abgerastert.

Während des Abrasterns der Probe oder auch nachdem die Probe vollständig abgerastert ist, werden die Schritte S4 und S5 ausgeführt.

In Schritt S4 wird aus den Messsignalen für jede Mikrolinse eine Fokusposition berechnet. Hierauf basierend wird eine Wellenfront berechnet, das heißt beispielsweise die Wellenfront an der Objektivpupille. Für ein besseres Signal-zu-Rausch-Verhältnis können auch die Messsignale zu derselben Mikrolinse, die für aufeinanderfolgende Probenpunkte aufgenommen wurden, zusammengefasst bzw. zusammenaddiert werden und gemeinsam zur Bestimmung der Wellenfront genutzt werden. In diesem Fall wird nicht für jeden Probenpunkt eine individuelle Wellenfront ermittelt. Vielmehr wird für bestimmte Bereiche jeweils eine Wellenfront berechnet. Dies ist geeignet, wenn die Ausschnitte im Wesentlichen einem sogenannten isoplanatischen Patch entsprechen.

Es kann vorteilhaft sein, dass die Bestimmung der Wellenfronten sehr schnell während des Scannens erfolgt. Dazu kann die Bestimmung der Fokuspositionen parallelisiert erfolgen, bspw. in einem Graphikprozessor (GPU, englisch: graphics processing unit). Die Bestimmung der Fokuspositionen eignet sich dazu in besonderer Weise, weil die Zuordnung der Sensorelemente zu den Mikrolinsen und damit zu den lateralen Bereichen der Wellenfront fest vorgegeben ist. Somit kann jeder Mikrolinse ein Prozessor innerhalb der GPU zugeordnet werden, sodass der Fokuspositionsbestimmungsalgorithmus gleichzeitig für jede der Mikrolinsen innerhalb des Arrays angewandt werden kann.

In Schritt S5 werden die zu einem Probenpunkt mit den mehreren Detektorelementen aufgenommenen Messsignale zusammengefasst. Es können insbesondere die Messsignale aller Detektorelemente, also alle gleichzeitig aufgenommenen Signale, addiert / integriert werden. Dies ergibt ein Probenpunktsignal. Pro abgetastetem Probenpunkt wird also ein Probenpunktsignal aufgenommen. Das Probenpunktsignal kann folglich auf dem gesamten gleichzeitig nachgewiesenen Probenlicht beruhen. Für die Wellenfrontmessung wurde kein Probenlichtanteil abgezweigt, der für das Probenpunktsignal verloren ginge. Vielmehr werden die Wellenfront(en) und die Probenpunktsignale aus denselben Messsignalen bestimmt. Insbesondere können alle Messsignale sowohl zur Wellenfrontbestimmung als auch zur Bestimmung der Probenpunktsignale genutzt werden.

Nachdem die gesamte Probe abgerastert ist, folgt Schritt S6. Hier wird aus den Probenpunktsignalen unter Berücksichtigung der ermittelten Wellenfronten ein Probenbild berechnet. Dies kann beispielsweise erfolgen, indem die Probenpunktsignale zu einem Rohbild zusammengesetzt werden. Jedes Probenpunktsignal entspricht einem Bildpunkt des Rohbildes. Anschließend wird eine Entfaltung des Rohbildes durchgeführt, wofür die ermittelten Wellenfronten genutzt werden. Die Entfaltung erfolgt separat für verschiedene Rohbildbereiche, wobei für jeden Rohbildbereich jeweils eine Wellenfront ermittelt wurde. Die Rohbildbereiche können entsprechend isoplanatischen Patches festgelegt werden. Hierzu kann eine Änderung zwischen aufeinanderfolgenden Fokuspositionen, die zu derselben Mikrolinse bestimmt wurden, ermittelt werden; das heißt eine Differenz in der Fokusposition von einer Mikrolinse zu nacheinander beleuchteten, verschiedenen Probenpunkten. Innerhalb des isoplanatischen Patches liegen nur geringe Änderungen des durchleuchteten Mediums vor und daher sind die Änderungen der Fokuspositionen hinter den jeweiligen Mikrolinsen auch gering. Bleibt die Änderung unter einem festgelegten Schwellwert, kann ein isoplanatischer Patch angenommen werden. Demgemäß werden die Fokuspositionen derselben Mikrolinse zu diesen nacheinander beleuchteten Probenpunkten zusammenaddiert und gemeinsam zur Bestimmung eines Wellenfrontabschnitts genutzt. Es können auch mehrere Fokuspositionen für den Schwellwertvergleich und die Einstufung, wie weit sich ein isoplanatischer Patch erstreckt, genutzt werden. Allerdings kann es auch vorteilhaft sein, Bereiche zu mitteln, welche eine starke Variation aufweisen. Zum Beispiel können so nur bestimmte Aberrationsordnungen berücksichtigt werden. In der Flexibilität der räumlichen Mittelung der Aberrationen über bestimmte Fokuspositionen liegt ein wesentlicher Unterschied zu herkömmlichen Verfahren, bei denen vorab festgelegt ist, über wie viele Probenpunkte Messignale zur Berechnung der Wellenfront gemittelt werden. Bei der Erfindung kann dies variabel festgelegt werden. Insbesondere können für ein einziges Probenbild bereichsabhängig die Messsignale zu unterschiedlich vielen Probenpunkten genutzt werden, um eine Wellenfront zu berechnen. In dieser Weise wird in Schritt S6 ein Probenbild ausgegeben, dessen Bildqualität gegenüber herkömmlichen Verfahren verbessert ist. Schritt S6 kann optional einem Nutzer unterschiedliche Auswahlmöglichkeiten bereitstellen, wie aus den Signalen die Wellenfrontinformationen ermittelt und ein Probenbild berechnet werden sollen. Die Auswahlmöglichkeiten können sich insbesondere darin unterscheiden, wie nacheinander aufgenommene Wellenfrontinformationen / Fokuspositionen gemittelt werden, insbesondere hinsichtlich der Anzahl zu mittelnder Signale zu nacheinander angefahrenen Probenpunkten. Dadurch können unterschiedlich große isoplanatische Bereiche für die Berechnung eines einzigen Probenbildes festgelegt werden.

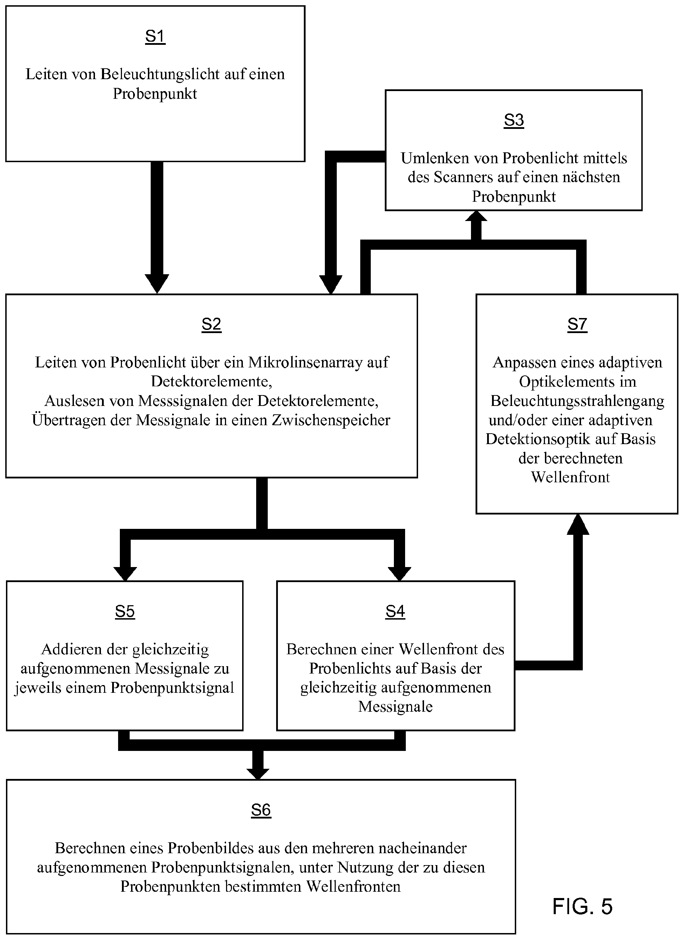

Durch die beschriebene Berücksichtigung der ermittelten Wellenfront in der Verrechnung der Probenpunktsignale können unerwünschte Aberrationen des Probenlichts wirkungsvoll kompensiert werden. Eine adaptive Optik muss hierfür nicht vorgesehen sein. Dadurch kann bei reduzierten Kosten eine schnelle Bildgebung erreicht werden, da eine langsamere Korrektur über eine Feedback-Schleife und adaptive Optik entfällt. Eine alternative Verfahrensvariante, bei welcher eine Feedback-Schleife mit adaptiver Optik genutzt wird, ist in Fig. 5 veranschaulicht. Diese unterscheidet sich von der vorhergehenden Figur darin, dass die in Schritt S4 ermittelte Wellenfront bereits während des Scanvorgangs verwendet wird. Dazu folgt auf den Schritt S4 der Schritt S7, in welchem die für einen oder mehrere Probenpunkte ermittelte Wellenfront genutzt wird, um ein adaptives Optikelement im Beleuchtungsstrahlengang einzustellen. Mit dieser Einstellung wird Beleuchtungslicht bei der nächsten Durchführung des Schritts S2 auf einen nächsten Probenpunkt gesendet. Alternativ oder zusätzlich zur Einstellung eines adaptiven Optikelements im Beleuchtungsstrahlengang kann in Schritt S7 auch die Einstellung einer adaptiven Detektionsoptik erfolgen, in welchem Fall die Schritte S7 und S3 auch gleichzeitig erfolgen können.

Eine Anpassung des adaptiven Optikelements kann langsamer sein als eine Verstellung des Scanners; das heißt, der in Fig. 5 gezeigte Kreislauf der Schritte S2 und S3 kann häufiger erfolgen als der Schritt S7.

Alternativ können aber auch für einen abzutastenden Probenpunkt mehrere Einstellungen des adaptiven Optikelements schnell nacheinander vorgenommen werden. In dieser Weise können für dieselbe Scanposition verschiedene Einstellungen des adaptiven Optikelements getestet werden, um unterschiedliche Aberrationen auszuprobieren. Fig. 5 ist bei dieser Ausführung dahingehend abgewandelt, dass auf die Anpassung des adaptiven Optikelements in Schritt S7 nicht stets die Scannerverstellung von Schritt S3 folgt, sondern auch direkt zu Schritt S2 gewechselt werden kann. Schritt S4 erfolgt hierbei nur optional zwischen den Schritten S2 und S7, da prinzipiell auch erst nach abgeschlossener Probenabtastung die Datenauswertung der Schritte S4 und S5 erfolgen kann.

Das adaptive Optikelement 20 kann beispielsweise ein räumlicher Modulator für Licht (SLM, englisch: spatial light modulator) oder ein deformierbarer Spiegel sein. Indem Schritt S4 ausgeführt wird, bevor der Scanvorgang für die Probenbildbestimmung abgeschlossen ist, kann die Information über die Wellenfront genutzt werden, um das adaptive Optikelement 20 in Schritt S7 einzustellen. Dabei wird das adaptive Optikelement 20 so eingestellt, dass eine verursachte Wellenfrontdeformierung zumindest teilweise kompensiert wird. Die vorgenannten Eigenschaften können zusätzlich oder alternativ für die adaptive Detektionsoptik 40 gelten. Für gute Ergebnisse sollte hierbei das Beleuchtungslicht noch auf denselben isoplanatischen Patch gerichtet sein, für den auch die Wellenfront in Schritt S4 ermittelt wurde. Dieser Vorteil kann auch bei einer Mehrpunktabtastung mit mehreren Beleuchtungspunkten genutzt werden, was im Folgenden näher beschrieben wird.

Die aufgenommenen Informationen über die Wellenfront können auch für nachfolgende Bildgebungen der gleichen Probe gespeichert werden. Dadurch können nachträglich die Informationen über die Wellenfront in unterschiedlicher Weise ausgewertet werden, um ein Probenbild zu berechnen, in welches möglichst keine unerwünschten Aberrationen eingehen.

In einer Abwandlung der Ausführung von Fig. 1 werden mehrere Beleuchtungspunkte gleichzeitig und voneinander beabstandet über die Probe gerastert. Die Beleuchtungspunkte können durch mehrere Einheiten der Lichtquelle 10, beispielsweise mehrere Laser, oder durch eine räumliche Aufspaltung des Beleuchtungslichts 12 erzeugt werden. Mehrere Probenlichtstrahlen, die auf verschiedene Beleuchtungspunkte zurückgehen, sollen separat nachgewiesen werden. Hierzu kann ein Probenlicht-Strahlteiler vor dem Mikrolinsenarray 50 angeordnet sein, insbesondere zwischen dem Strahlteiler 22 und dem Mikrolinsenarray 50. Der Probenlicht-Strahlteiler kann in einer Zwischenbildebene angeordnet sein und beispielsweise ein Linsenarray oder ein Spiegelarray sein. Probenlichtstrahlen, die auf verschiedene Beleuchtungspunkte zurückgehen, werden hierdurch auf verschiedene Detektionsstrahlengänge geleitet, in denen jeweils ein Mikrolinsenarray mit darauffolgendem Lichtdetektor angeordnet ist. Die Detektionsstrahlengänge können zu unterschiedlichen Bereichen desselben Mikrolinsenarrays führen, so dass unterschiedliche Probenlichtstrahlen auf verschiedene Detektorelemente treffen. In dieser Weise können gleichzeitig mehrere Probenbereiche abgerastert werden.

Die Beleuchtungsstrahlen können entweder über voneinander getrennte Probenbereiche geführt werden, oder auch nacheinander dieselben Probenbereiche abrastern. Für eine gesteigerte Bildqualität kann es zielführend sein, wenn mehrmals derselbe Probenpunkt abgetastet wird. In diesem Fall kann auch, wie oben beschrieben, die Wellenfrontinformation, die zu einem Probenpunkt bestimmt wurde, für die Einstellung der Beleuchtungsintensität und/oder des adaptiven Optikelements bei der wiederholten Abtastung desselben Probenpunktes genutzt werden. War beispielsweise die Beleuchtungsintensität für diesen Probenpunkt bei der ersten Abtastung zu hoch, wird nun die Beleuchtungsintensität (vorübergehend) reduziert. Außerdem kann das adaptive Optikelement so eingestellt werden, dass eine Wellenfrontverformung bei diesem Probenpunkt zumindest teilweise kompensiert wird. Es kann für jeden Beleuchtungslichtstrahl ein jeweiliges adaptives Optikelement genutzt werden, wobei diese deutlich aus einer Pupillenebene herauspropagiert werden sollten, damit die einzelnen Beleuchtungslichtstrahlen separiert durch die adaptiven Optikelemente adressiert werden können. Die Vorfestlegung der isoplanatischen Flecken stellt dann lediglich eine Startbedingung zur Bestimmung der Wellenfrontinformation dar, die gemäß des beschriebenen Verfahrens an die Probe oder den Probenausschnitt angepasst wird.

Herkömmlicherweise wird vorab, also vor Beginn des Scanvorgangs, die Größe und Lage der Probenbereiche festgelegt, für die das adaptive Optikelement eine bestimmte Korrektureinstellung einnehmen soll. Was für eine Korrektureinstellung vorgenommen wird, erfolgt abhängig von während dem Scan aufgenommenen Daten. Allerdings sind die Größe und Lage der Probenbereiche, für die die Korrektureinstellung mit dem adaptiven Optikelement erfolgt, starr festgelegt. Hingegen können bei der Erfindung die Größe und Lage der Probenbereiche, für die dieselbe Einstellung mit dem adaptiven Optikelement vorgenommen wird, während des Scans variabel festgelegt werden.

Mit dem Lichtmikroskop der vorliegenden Erfindung kann somit die Qualität eines Probenbilds mit Hilfe einer Wellenfrontmessung verbessert werden, ohne dass durch die Wellenfrontmessung ein Anteil des Probenlichts für die Aufnahme des Probenbildes verloren ginge.

### Bezugszeichenliste

- 8: Lichtquellenanschluss
- 10: Lichtquelle
- 12: Beleuchtungslicht
- 15: Probenlicht
- 16: Wellenfront
- 20: Adaptives Optikelement
- 21, 23, 24, 26, 27: Optikelemente
- 22: Strahlteiler
- 25: Scanner
- 30: Objektiv
- 35: Probe
- 40: Adaptive Detektionsoptik
- 41: Optikelement
- 50: Mikrolinsenarray
- 51-54: Mikrolinsen des Mikrolinsenarray
- 60: Lichtdetektor
- 61-65: Detektorelemente des Lichtdetektors
- 70: Elektronikeinrichtung
- 71-74: Fokuspositionen hinter den Mikrolinsen 51-54
- 100: Lichtmikroskop
- S1 - S7: Verfahrensschritte

## Patentansprüche

1. Lichtmikroskop
mit einem Scanner (25) zum Abrastern einer Probe (35) mit Beleuchtungslicht (12),
mit einem Lichtdetektor (60) zum Messen von Probenlicht (15),
mit einem Mikrolinsenarray (50), welches mehrere Mikrolinsen (51-54) umfasst und im Bereich einer Pupillenebene angeordnet ist,
wobei hinter jeder Mikrolinse (51-54) jeweils mehrere Detektorelemente (61-65) des Lichtdetektors (60) angeordnet sind,
mit einer Elektronikeinrichtung (70), welche dazu eingerichtet ist,
- zu jeder oder zu zumindest mehreren der Mikrolinsen (51-54) jeweils eine Intensitätsverteilung mittels der hinter der jeweiligen Mikrolinse (51-54) angeordneten Detektorelementen (61-65) zu messen und hieraus eine Wellenfrontinformation bezüglich des Probenlichts (15) abzuleiten,
**dadurch gekennzeichnet,**
**dass** der Lichtdetektor (60) eine vollständige Auslesefrequenz von mindestens 100 kHz hat,
**dass** die Elektronikeinrichtung (70) dazu eingerichtet ist,
- Signale der mehreren Detektorelemente (61-65) zu einem Probenpunktsignal zu addieren oder zu integrieren,
- mit dem Scanner (25) nacheinander Beleuchtungslicht (12) auf verschiedene Probenpunkte zu lenken und jeweilige Probenpunktsignale aufzunehmen, aus denen ein Probenbild gebildet wird, wobei für zumindest einige der verschiedenen Probenpunkte auch eine jeweilige Wellenfrontinformation bezüglich des Probenlichts (15) bestimmt wird.

2. Lichtmikroskop nach Anspruch 1,
**dadurch gekennzeichnet,**
**dass** die Elektronikeinrichtung (70) dazu eingerichtet ist,
- ein Probenbild aus den mehreren Probenpunktsignalen zu berechnen, wobei die mit denselben Detektorelementen (61-65) ermittelten Wellenfrontinformationen für die Berechnung des Probenbilds berücksichtigt werden, indem aus den ermittelten Wellenfrontinformationen Punktspreizfunktionen für den oder die jeweils zugehörigen Probenpunktsignale ermittelt und in der Berechnung des Probenbildes die ermittelten Punktspreizfunktionen für eine Entfaltung der Probenpunktsignale genutzt werden.

3. Lichtmikroskop nach Anspruch 1 oder 2,
**dadurch gekennzeichnet,**
**dass** die Elektronikeinrichtung (70) dazu eingerichtet ist,
- aus der jeweiligen Intensitätsverteilung hinter jeder Mikrolinse (51-54) eine jeweilige Fokusposition (71-74) zu bestimmen und aus den mehreren in dieser Weise bestimmten Fokuspositionen (71-74) die Wellenfrontinformation abzuleiten.

4. Lichtmikroskop nach Anspruch 2 oder 3,
**dadurch gekennzeichnet,**
**dass** die Fokuspositionen (71-74), die zu den jeweiligen Mikrolinsen (51-54) bestimmt werden, gemittelte Fokuspositionen sind, wozu die Elektronikeinrichtung (70) dazu eingerichtet ist,
- Signale, welche von den hinter der jeweiligen Mikrolinse (51-54) angeordneten Detektorelementen (61-65) zu verschiedenen nacheinander beleuchteten Probenpunkten aufgenommen wurden, zu mitteln oder zu addieren.

5. Lichtmikroskop nach Anspruch 4,
**dadurch gekennzeichnet,**
**dass** zur Anpassung einer Probenbereichsgröße, für die eine gemittelte Fokusposition berechnet wird, an einen isoplanatischen Probenfleck, die Elektronikeinrichtung (70) dazu eingerichtet ist,
- mit den jeweiligen Detektorelementen (61-65) zu einer der Mikrolinsen (51) zunächst für jeden nacheinander beleuchteten Probenpunkt jeweils eine momentane Fokusposition (71) zu bestimmen und
- mehrere momentane Fokuspositionen (71) zu mitteln, wobei eine Anzahl der zu mittelnden momentanen Fokuspositionen (71) abhängig von einer Differenz zwischen den aufeinanderfolgenden momentanen Fokuspositionen (71) festgelegt wird.

6. Lichtmikroskop nach einem der Ansprüche 1 bis 5,
**dadurch gekennzeichnet,**
**dass** ein adaptives Optikelement (20) in einem Beleuchtungsstrahlengang vorhanden ist, mit dem eine Wellenfront des Beleuchtungslichts (12) über dessen Querschnitt variabel beeinflussbar ist,
**dass** die Elektronikeinrichtung (70) außerdem dazu eingerichtet ist, die ermittelten Wellenfrontinformationen nicht nur für die Berechnung des Probenbilds zu berücksichtigen, sondern auch für eine Einstellung des adaptiven Optikelements (20).

7. Lichtmikroskop nach einem der Ansprüche 1 bis 6,
**dadurch gekennzeichnet,**
**dass** eine adaptive Detektionsoptik (40) in einem Detektionsstrahlengang vorhanden ist, mit der eine Wellenfront des Probenlichts (15) über dessen Querschnitt variabel beeinflussbar ist,
**dass** die Elektronikeinrichtung (70) dazu eingerichtet ist, die ermittelten Wellenfrontinformationen nicht nur für die Berechnung des Probenbilds zu berücksichtigen, sondern auch für eine Einstellung der adaptiven Detektionsoptik (40).

8. Lichtmikroskop nach Anspruch 6 oder 7,
**dadurch gekennzeichnet,**
**dass** die Elektronikeinrichtung (70) dazu eingerichtet ist, eine Anzahl an abgerasterten Probenpunkten, nach welcher eine Verstellung des adaptiven Optikelements (20) oder der adaptiven Detektionsoptik (40) erfolgt, während eines Probenscans zu variieren, insbesondere abhängig davon, wie stark sich die ermittelte Wellenfrontinformationen zwischen aufeinanderfolgenden Probenpunkten ändert.

9. Lichtmikroskop nach einem der Ansprüche 6 bis 8,
**dadurch gekennzeichnet,**
**dass** ein Datenpuffer vorhanden ist und die Elektronikeinrichtung (70) dazu eingerichtet ist,
- in den Datenpuffer aufgenommene Signale zu zwei oder mehr aufeinanderfolgend beleuchteten Probenpunkten während des Abrasterns der Probe (35) zu laden,
- eine Datenmittelung von Signalen, die im Datenpuffer zwischengespeichert sind, durchzuführen,
- auf Basis der gemittelten Signale eine aktuelle Wellenfrontinformation abzuleiten und
- das adaptive Optikelement (20) oder die adaptive Detektionsoptik (40) auf Basis der in dieser Weise ermittelten aktuellen Wellenfrontinformation während dem Abrastern der Probe (35) einzustellen.

10. Lichtmikroskop nach Anspruch 8 oder 9,
**dadurch gekennzeichnet,**
**dass** die Berechnung der aktuellen Wellenfronten, die während dem Abrastern der Probe (35) zum Einstellen des adaptiven Optikelements (20) oder der adaptiven Detektionsoptik (40) durchgeführt wird, verschieden ist, insbesondere bezüglich der Datenmittelung, von der Ermittlung der Wellenfronten, die nach vollständigem Abrastern der Probe (35) für die Berechnung des Probenbilds genutzt werden.

11. Lichtmikroskop nach einem der Ansprüche 1 bis 10,
**dadurch gekennzeichnet,**
**dass** die Elektronikeinrichtung (70) dazu eingerichtet ist,
- in einem Datenspeicher die Signale der Detektorelemente (61-65), die zu verschiedenen Probenpunkten aufgenommen wurden, zu speichern,
- unterschiedliche Auswahlmöglichkeiten einem Nutzer bereitzustellen, wie aus den Signalen die Wellenfrontinformationen ermittelt und ein Probenbild berechnet wird.

12. Lichtmikroskop nach einem der Ansprüche 1 bis 10,
**dadurch gekennzeichnet,**
**dass** die Elektronikeinrichtung (70) und Optikelemente (21, 23, 24, 26, 27) zum Leiten von Beleuchtungslicht (12) zu einer Probe (35) dazu eingerichtet sind, mit zwei oder mehr Beleuchtungslichtstrahlen gleichzeitig die Probe (35) abzurastern,
**dass** im Bereich einer Zwischenbildebene ein Strahlteiler, insbesondere ein Linsenarray, vorgesehen ist, womit Probenlichtstrahlen, die auf verschiedene Beleuchtungslichtstrahlen zurückgehen, auf unterschiedliche Strahlengänge gespalten werden, die zu unterschiedlichen Teilen des Mikrolinsenarrays (50) mit den dahinter befindlichen Detektorelementen (61-65) und/oder einer adaptiven Detektionsoptik (40) führen.

13. Lichtmikroskop nach einem der Ansprüche 3 bis 12,
**dadurch gekennzeichnet,**
**dass** in der Elektronikeinrichtung (70) ein, insbesondere auf einem neuronalen Netzwerk beruhender, Auswertungsalgorithmus gespeichert ist, welcher dazu gestaltet ist, aus den mehreren bestimmten Fokuspositionen (71-74) eine Wellenfront (16) des Probenlichts (15) zu ermitteln, und/oder dass die Elektronikeinrichtung (70) dazu eingerichtet ist, aus Signalen, die von den Detektorelementen (61-65) zu demselben Probenpunkt aufgenommen wurden, ein Konfokalsignal als Probenpunktsignal zu berechnen.

14. Lichtmikroskop nach einem der Ansprüche 1 bis 13,
**dadurch gekennzeichnet,**
**dass** die Detektorelemente (61-65) photonenzählende Detektorelemente sind, insbesondere Einzelphoton-Avalanche-Dioden.

15. Mikroskopieverfahren, umfassend die Schritte:
Abrastern einer Probe (35) mit Beleuchtungslicht (12) mit Hilfe eines Scanners (25),
Leiten von Probenlicht (15), das von der Probe (35) ausgeht, mittels eines Mikrolinsenarrays (50) zu einem Lichtdetektor (60),
wobei das Mikrolinsenarray (50) mehrere Mikrolinsen (51-54) umfasst und im Bereich einer Pupillenebene angeordnet ist,
wobei der Lichtdetektor (60) mehrere Detektorelemente (61-65) umfasst und hinter jeder Mikrolinse (51-54) jeweils mehrere der Detektorelemente (61-65) angeordnet sind,
wobei zu jeder oder zu zumindest mehreren der Mikrolinsen (51-54) jeweils eine Intensitätsverteilung mittels der hinter der jeweiligen Mikrolinse (51-54) angeordneten Detektorelementen (61-65) gemessen wird und hieraus eine Wellenfrontinformation bezüglich des Probenlichts (15) abgeleitet wird,
**dadurch gekennzeichnet, dass**
- die Detektorelemente (61-65) mit einer Frequenz ausgelesen werden, deren Periodenlänge innerhalb einer Pixelverweildauer liegt, mit welcher das Abrastern der Probe (35) erfolgt,
- Signale der mehreren Detektorelemente (61-65) zu einem Probenpunktsignal addiert oder integriert werden,
- mit dem Scanner (25) nacheinander Beleuchtungslicht (12) auf verschiedene Probenpunkte gelenkt und jeweilige Probenpunktsignale aufgenommen werden, aus denen ein Probenbild gebildet wird, wobei für zumindest einige der verschiedenen Probenpunkte auch eine jeweilige Wellenfrontinformation bezüglich des Probenlichts (15) bestimmt wird.

## Claims

1. A light microscope comprising
a scanner (25) for scanning a sample (35) with illuminating light (12);
a light detector (60) for measuring sample light (15);
a microlens array (50), which comprises a plurality of microlenses (51-54) and is arranged in the area of a pupil plane;
wherein a plurality of detector elements (61-65) of the light detector (60) are respectively arranged behind each microlens (51-54);
an electronics unit (70) configured to:
- for each or at least a plurality of the microlenses (51-54), measure a respective intensity distribution with the detector elements (61-65) arranged behind the respective microlens (51-54) and derive a wavefront datum regarding the sample light (15) therefrom,
**characterized in that**
the light detector (60) has a complete readout frequency of at least 100 kHz;
the electronics unit (70) is configured to
- add or integrate signals of the plurality of detector elements (61-65) to form a sample point signal,
- successively direct illuminating light (12) onto different sample points with the scanner (25) and capture corresponding sample point signals from which a sample image is formed, wherein, for at least some of the different sample points, a corresponding wavefront datum regarding the sample light (15) is determined.

2. The light microscope according to claim 1,
**characterized in that**
the electronics unit (70) is configured to
- compute a sample image from the plurality of sample point signals, wherein the wavefront data determined with said detector elements (61-65) is taken into account for the computation of the sample image, by determining point spread functions for the corresponding sample point signal or signals from the determined wavefront data and using the determined point spread functions for a deconvolution of the sample point signals in the computation of the sample image.

3. The light microscope according to 1 or 2,
**characterized in that**
the electronics unit (70) is configured to
- respectively determine a focus position (71-74) from the respective intensity distributions behind each microlens (51-54) and derive the wavefront datum from the plurality of focus positions (71-74) determined in this manner.

4. The light microscope according to claim 2 or 3,
**characterized in that**
the focus positions (71-74) determined for the respective microlenses (51-54) are averaged focus positions, the electronics unit (70) accordingly being configured to
- average or sum signals captured by the detector elements (61-65) arranged behind the respective microlenses (51-54) for different, successively illuminated sample points.

5. The light microscope according to claim 4,
**characterized in that**,
to adapt a sample area size, for which an averaged focus position is computed, to an isoplanatic sample patch, the electronics unit (70) is configured to
- determine, initially for every successively illuminated sample point, respective current focus positions (71) with the respective detector elements (61-65) for one of the microlenses (51),
- average a plurality of current focus positions (71), wherein a number of the current focus positions (71) to be averaged is set as a function of a difference between the successive current focus positions (71).

6. The light microscope according to one of claims 1 to 5,
**characterized in that**
an adaptive optic element (20) is provided in an illuminating light path, with which a wavefront of the illuminating light (12) can be influenced in a variable manner over its cross-section,
and the electronics unit (70) is further configured to take the determined wavefront data into account both for the computation of the sample image and for a setting of the adaptive optic element (20).

7. The light microscope according to one of claims 1 to 6,
**characterized in that**
an adaptive detection optic (40) is provided in a detection light path, with which a wavefront of the sample light (15) can be influenced in a variable manner over its cross-section,
and the electronics unit (70) is configured to take the determined wavefront data into account both for the calculation of the sample image and for a setting of the adaptive detection optic (40).

8. The light microscope according to 6 or 7,
**characterized in that**
the electronics unit (70) is configured to vary a number of scanned sample points after which an adjustment of the adaptive optic element (20) or of the adaptive detection optic (40) occurs during a sample scan, in particular in dependence of an extent to which the determined wavefront data changes between successive sample points.

9. The light microscope according to one of claims 6 to 8,
**characterized in that**
a data buffer is provided and the electronics unit (70) is configured to
- load signals captured for two or more successively illuminated sample points into the data buffer during the scanning of the sample (35),
- carry out a data averaging of signals temporarily stored in the data buffer,
- derive a current wavefront datum from the averaged signals and
- set the adaptive optic element (20) or the adaptive detection optic (40) based on the current wavefront datum determined in this manner during the scanning of the sample (35).

10. The light microscope according to claim 8 or 9,
**characterized in that**
the computation of the current wavefronts carried out during the scanning of the sample (35) for setting the adaptive optic element (20) or the adaptive detection optic (40) is different, in particular in terms of its data averaging, from the determination of the wavefronts that are used for the computation of the sample image after a complete scan of the sample (35).

11. The light microscope according to one of claims 1 to 10,
**characterized in that**
the electronics unit (70) is configured to
- save the signals of the detector elements (61-65) that were captured for different sample points in a data memory,
- provide a user with different options regarding how the wavefront data is determined and a sample image is computed from the signals.

12. The light microscope according to one of claims 1 to 10,
**characterized in that**
the electronics unit (70) and optic elements (21, 23, 24, 26, 27) for guiding illuminating light (12) to a sample (35) are configured to scan the sample (35) simultaneously with two or more illuminating light beams,
and a beam splitter, in particular an array of lenses, is provided in the area of an intermediate image plane, whereby sample light beams caused by different illuminating light beams are split into different light paths which lead to different parts of the microlens array (50) with the detector elements (61-65) located behind them and/or which lead to an adaptive detection optic (40).

13. The light microscope according to one of claims 3 to 12,
**characterized in that**
an evaluation algorithm is stored in the electronics unit (70), in particular an evaluation algorithm based on a neural network, which is designed to determine a wavefront (16) of the sample light (15) from the plurality of determined focus positions (71-74) and/or
the electronics unit (70) is configured to compute a confocal signal as the sample point signal from signals captured by the detector elements (61-65) for the same sample point.

14. The light microscope according to one of claims 1 to 13,
**characterized in that**
the detector elements (61-65) are photon-counting detector elements, in particular single-photon avalanche diodes.

15. A microscopy method, comprising the steps:
scanning a sample (35) with illuminating light (12) by means of a scanner (25);
guiding sample light (15) from the sample (35) to a light detector (60) by means of a microlens array (50);
wherein the microlens array (50) comprises a plurality of microlenses (51-54) and is arranged in a region of a pupil plane;
wherein the light detector (60) comprises a plurality of detector elements (61-65) and a plurality of the detector elements (61-65) are respectively arranged behind each microlens (51-54);
wherein, for each or at least a plurality of the microlenses (51-54), a respective intensity distribution is measured with the detector elements (61-65) arranged behind the respective microlens (51-54) and a wavefront datum regarding the sample light (15) is derived therefrom;
**characterized in that**
- the detector elements (61-65) are read out with a frequency for which a period length is within a pixel dwell time with which the scanning of the sample (35) is carried out;
- signals of the plurality of detector elements (61-65) are added or integrated to form a sample point signal;
- illuminating light (12) is successively deflected onto different sample points with the scanner (25) and corresponding sample point signals are captured from which a sample image is formed, wherein, for at least some of the different sample points, a corresponding wavefront datum regarding the sample light (15) is also determined.

## Revendications

1. Microscope optique comprenant
un scanner (25) destiné à balayer un échantillon (35) avec une lumière d'éclairage (12),
un détecteur de lumière (60) destiné à mesurer la lumière d'échantillon (15),
un réseau de microlentilles (50) qui comprend plusieurs microlentilles (51 à 54) et qui est disposé dans la zone d'un plan pupillaire,
plusieurs éléments détecteurs (61 à 65) du détecteur de lumière (60) étant disposés derrière chaque microlentille (51 à 54),
un dispositif électronique (70) qui est conçu pour
- mesurer une distribution d'intensité pour chacune ou au moins plusieurs des microlentilles (51 à 54) au moyen des éléments détecteurs (61 à 65) disposés derrière la microlentille respective (51 à 54) et en déduire une information de front d'onde relative à la lumière d'échantillon (15),
**caractérisé en ce que**
le détecteur de lumière (60) présente une fréquence de lecture complète d'au moins 100 kHz,
le dispositif électronique (70) est conçu pour
- ajouter ou intégrer des signaux des plusieurs éléments détecteurs (61 à 65) pour former un signal de point d'échantillon,
- diriger avec le scanner (25) la lumière d'éclairage (12) successivement sur différents points d'échantillon et acquérir des signaux de points d'échantillon respectifs à partir desquels une image d'échantillon est formée, une information de front d'onde respective relative à la lumière d'échantillon (15) étant également déterminée pour au moins certains des différents points d'échantillon.

2. Microscope optique selon la revendication 1,
**caractérisé en ce que**
le dispositif électronique (70) est conçu pour
- calculer une image d'échantillon à partir des plusieurs signaux de points d'échantillon, les informations de front d'onde déterminées avec les mêmes éléments détecteurs (61 à 65) étant prises en compte pour le calcul de l'image d'échantillon du fait que des fonctions d'étalement de points destinées au signal ou aux signaux de points d'échantillon associé(s) sont déterminées à partir des informations de front d'onde déterminées et que les fonctions d'étalement de points déterminées sont utilisées pour déplier les signaux de points d'échantillon dans le calcul de l'image d'échantillon.

3. Microscope optique selon la revendication 1 ou 2,
**caractérisé en ce que**
le dispositif électronique (70) est conçu pour
- déterminer une position focale respective (71 à 74) à partir de la distribution d'intensité respective derrière chaque microlentille (51 à 54) et déduire l'information de front d'onde à partir des plusieurs positions focales (71 à 74) ainsi déterminées.

4. Microscope optique selon la revendication 2 ou 3,
caractérisé en que
les positions focales (71 à 74) qui sont déterminées pour les microlentilles respectives (51 à 54) sont des positions focales moyennées pour lesquelles le dispositif électronique (70) est conçu pour
- moyenner ou additionner les signaux qui ont été acquis par les éléments détecteurs (61 à 65) disposés derrière les microlentilles respectives (51 à 54) à différents points d'échantillon successivement éclairés.

5. Microscope optique selon la revendication 4,
**caractérisé en ce que**
afin d'adapter une taille de zone d'échantillon, pour laquelle une position focale moyenne est calculée, à un défaut d'échantillon isoplanétique, le dispositif électronique (70) est conçu pour
- déterminer d'abord une position focale instantanée (71) pour chaque point d'échantillon éclairé successivement avec les éléments détecteurs respectifs (61 à 65) relatifs à l'une des microlentilles (51) et
- moyenner plusieurs positions focales instantanées (71), un certain nombre des positions focales instantanées (71) à moyenner étant déterminé en fonction d'une différence entre les positions focales instantanées successives (71).

6. Microscope optique selon l'une des revendications 1 à 5,
**caractérisé en ce que**
un élément d'optique adaptatif (20), qui permet d'influer sur un front d'onde de la lumière d'éclairage (12) de manière variable en termes de section transversale de celle-ci, est prévu dans trajet de faisceau d'éclairage,
le dispositif électronique (70) est également conçu pour prendre en compte les informations de front d'onde déterminées non seulement pour calculer l'image d'échantillon mais également pour régler l'élément d'optique adaptatif (20).

7. Microscope optique selon l'une des revendications 1 à 6,
**caractérisé en ce que**
une optique de détection adaptative (40), qui permet d'influer sur un front d'onde de la lumière d'échantillon (15) de manière variable en termes de section transversale de celle-ci, est prévue dans un trajet de faisceau de détection,
le dispositif électronique (70) est conçu pour prendre en compte les informations de front d'onde déterminées non seulement pour calculer l'image d'échantillon mais également pour régler l'optique de détection adaptative (40).

8. Microscope optique selon la revendication 6 ou 7,
**caractérisé en ce que**
le dispositif électronique (70) est conçu pour faire varier le nombre de points d'échantillon balayés, avec lequel un ajustement de l'élément d'optique adaptatif (20) ou de l'optique de détection adaptative (40) est effectué, pendant un balayage d'échantillon, en particulier en fonction de l'ampleur des changements des informations de front d'onde déterminées entre des points d'échantillon successifs.

9. Microscope optique selon l'une des revendications 6 à 8,
**caractérisé en ce que**
un tampon de données est prévu et le dispositif électronique (70) est conçu pour
- charger des signaux acquis dans le tampon de données sur deux points d'échantillon éclairés successivement ou plus pendant le balayage de l'échantillon (35),
- réaliser une moyenne des données de signaux qui sont mémorisées temporairement dans le tampon de données,
- déduire une information de front d'onde actuelle sur la base des signaux moyennés et
- régler pendant le balayage de l'échantillon (35) l'élément d'optique adaptatif (20) ou l'optique de détection adaptative (40) sur la base de l'information de front d'onde actuelle ainsi déterminée.

10. Microscope optique selon la revendication 8 ou 9,
**caractérisé en ce que**
le calcul des fronts d'onde actuels, qui est effectué pendant le balayage de l'échantillon (35) pour régler l'élément d'optique adaptatif (20) ou l'optique de détection adaptative (40), est différent, notamment en ce qui concerne la moyenne de données, de la détermination des fronts d'onde qui peuvent être utilisés pour calculer l'image de l'échantillon après un balayage complet de l'échantillon (35).

11. Microscope optique selon l'une des revendications 1 à 10,
**caractérisé en ce que**
le dispositif électronique (70) est conçu pour
- mémoriser dans une mémoire de données les signaux provenant des éléments détecteurs (61 à 65) qui ont été acquis à différents points d'échantillon,
- fournir à un utilisateur des options différentes quant à la manière de déterminer les informations de front d'onde à partir des signaux et de calculer une image d'échantillon.

12. Microscope optique selon l'une des revendications 1 à 10, **caractérisé en ce que**
le dispositif électronique (70) et les éléments d'optique (21, 23, 24, 26, 27) destinés à diriger la lumière d'éclairage (12) vers un échantillon (35) sont conçus pour balayer simultanément l'échantillon (35) avec deux faisceaux de lumière d'éclairage ou plus,
un séparateur de faisceaux, en particulier un réseau de lentilles, qui permet de diviser des faisceaux de lumière d'échantillon, attribués à différents faisceaux de lumière d'éclairage, sur différents trajets de faisceaux qui conduisent à différentes parties du réseau de microlentilles (50) pourvus des éléments détecteurs (61-65) situés derrière et/ou d'une optique de détection adaptative (40), est prévu dans la zone d'un plan d'image intermédiaire.

13. Microscope optique selon l'une des revendications 3 à 12,
**caractérisé en ce que**
un algorithme d'évaluation, qui est notamment basé sur un réseau neuronal et qui est conçu pour déterminer un front d'onde (16) de la lumière d'échantillon (15) à partir des plusieurs positions focales déterminées (71 à 74), est mémorisé dans le dispositif électronique (70) et/ou
le dispositif électronique (70) est conçu pour calculer un signal confocal comme signal de point d'échantillon à partir de signaux qui ont été acquis par les éléments détecteurs (61 à 65) pour le même point d'échantillon.

14. Microscope optique selon l'une des revendications 1 à 13,
**caractérisé en ce que**
les éléments détecteurs (61 à 65) sont des éléments détecteurs à comptage de photons, en particulier des diodes à avalanche à photon unique.

15. Procédé de microscopie comprenant les étapes suivantes :
balayer un échantillon (35) avec une lumière d'éclairage (12) à l'aide d'un scanner (25),
diriger la lumière d'échantillon (15), émanant de l'échantillon (35), vers un détecteur de lumière (60) au moyen d'un réseau de microlentilles (50),
le réseau de microlentilles (50) comprenant une pluralité de microlentilles (51 à 54) et étant disposé dans la zone d'un plan pupillaire,
le détecteur de lumière (60) comprenant une pluralité d'éléments détecteurs (61 à 65) et une pluralité d'éléments détecteurs (61 à 65) étant disposés derrière chaque microlentille (51 à 54),
une distribution d'intensité étant mesurée pour chacune ou au moins plusieurs des microlentilles (51 à 54) au moyen des éléments détecteurs (61 à 65) disposés derrière la microlentille respective (51 à 54) et une information de front d'onde relative à la lumière d'échantillon (15) en étant déduite,
**caractérisé en ce que**
- les éléments détecteurs (61 à 65) sont lus à une fréquence dont la durée de période est située dans un temps de séjour de pixel avec lequel le balayage de l'échantillon (35) est effectué,
- des signaux des différents éléments détecteurs (61 à 65) sont ajoutés ou intégrés pour former un signal de point d'échantillon,
- la lumière d'éclairage (12) est dirigée successivement sur différents points d'échantillon avec le scanner (25) et des signaux de points d'échantillon respectifs, à partir desquels une image d'échantillon est formée, sont acquis, une information de front d'onde respective relative à la lumière d'échantillon (15) étant également déterminée pour au moins certains des différents points d'échantillon.
